(19) Europäisches Patentamt
European Patent Office
Office européen des brevets

(11) Veröffentlichungsnummer : **0 148 121**
**B1**

(12) # EUROPÄISCHE PATENTSCHRIFT

(45) Veröffentlichungstag der Patentschrift : **09.11.88**

(51) Int. Cl.[4] : **C 09 B 55/00**

(21) Anmeldenummer : **84810606.8**

(22) Anmeldetag : **10.12.84**

(54) **Unsymmetrische 1:2-Chromkomplexfarbstoffe.**

(30) Priorität : **15.12.83 CH 6691/83**

(43) Veröffentlichungstag der Anmeldung : **10.07.85 Patentblatt 85/28**

(45) Bekanntmachung des Hinweises auf die Patenterteilung : **09.11.88 Patentblatt 88/45**

(84) Benannte Vertragsstaaten : **CH DE FR GB IT LI**

(56) Entgegenhaltungen :
**EP-A- 0 066 230**
**EP-A- 0 112 281**
**DE-A- 2 723 155**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Beffa, Fabio, Dr.**
**Burgstrasse 38**
**CH-4125 Riehen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Es sind bereits z. B. aus der EP-A 0 066 230 1 : 2-Metallkomplexe von einem Azofarbstoff und einem Azomethinfarbstoff, der durch eine Monosulfophenylazo-Gruppe substiuiert ist, bekannt. Desgleichen sind z. B. aus der DE-A- 2,723,155 1 : 2-Metallkomplexe von einem Azofarbstoff und eines Azomethinfarbstoff, der aus einem aliphatischen Amin und einem Disulfonaphthylazobenzaldehyd aufgebaut ist, bekannt. Gegenstand der vorliegenden Erfindung sind 1 : 2-Chromkomplexfarbstoffe der Formel I

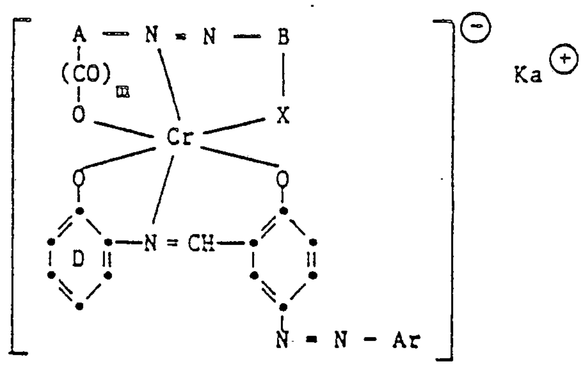

(I)

die 2 bis 7 Gruppen der Formel $—SO_3^{\ominus}Ka^{\oplus}$ aufweisen, und
worin

A den Rest einer Diazokomponente der Benzol- oder Naphthalinreihe, welche die Hydroxy- oder Carboxygruppe in o-Stellung zur Azogruppe trägt,

B den Rest einer Kupplungskomponente, welche die Gruppe X in Nachbarstellung zur Azogruppe trägt,

X Sauerstoff oder einen Rest der Formel —NR—, wobei R Wasserstoff oder $C_1$-$C_4$-Alkyl bedeutet,

Ar einen gegebenenfalls substituierten Arylrest, welcher mindestens zwei Sulfogruppen trägt,

m 0 oder 1

und

$Ka^{\oplus}$ ein Kation bedeutet,

wobei der Ring D weitere Substituenten tragen kann mit der Massgabe, dass sich keine Nitrogruppe in der 5-Position des 1-Hydroxy-2-aminobenzolrests D befindet.

1 : 2-Chromkomplexfarbstoffe deren Azomethinkomponente in dieser Position eine Nitrogruppe aufweist sind aus der EP-A-0 112 281 bekannt. Dieses Dokument ist nach veröffentlicht und fällt unter Art. 54 (3) EPÜ.

In den erfindungsgemässen Chromkomplexfarbstoffen der obigen Formel I kann der Rest A noch einen oder mehrere weitere Substituenten tragen, z. B. niedermolekulares Alkyl oder Alkoxy, Halogen, wie z. B. Chlor oder Brom, Nitro, Cyano, Sulfo, Carboxy, Phosphono, Alkylsulfonyl, wie z. B. Methylsulfonyl, Sulfamide, wie z. B. Sulfamid oder N-Methylsulfamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit « Acylamino » werden niedermolekulare Alkanoylamino-, Alkylsulfonylamino- und Alkoxycarbonylaminoreste sowie Aroylamino- und Arylsulfonylaminoreste bezeichnet.

Der Rest A leitet sich beispielsweise von folgenden Aminen ab: Anthranilsäure, 4- oder 5-Chloranthranilsäure, 4- oder 5-Sulfoanthranilsäure, 2-Amino-3-naphthoesäure, 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 1-Hydroxy-2-aminobenzol-4-sulfoanthranilid, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfonsäure, 4-Nitro-2-amino-1-hydroxybenzol-6-sulfonsäure, 6-Nitro-2-amino-1-hydroxybenzol-4-sulfosäure, 4-Chlor-2-amino-1-hydroxybenzol-6-sulfosäure, 1-Amino-2-hydroxynaphthalin-4-sulfosäure, 1-Amino-2-hydroxy-6-nitronaphthalin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure.

Statt der oben genannten Amine mit Hydroxygruppen kommen für A auch entsprechende Methoxyverbindungen oder entsprechende Verbindungen, deren Hydroxygruppe tosyliert wurde, in Betracht, wie Anisidin, 4- oder 5-Chloranisidin, 4- oder 5-Nitroanisidin, Anisidin-4- oder -5-sulfosäure, oder tosyliertes 1-Hydroxy-2-aminobenzol, wobei die Methoxy- oder 0-Tosylgruppe vor oder bei der Metallisierung in eine OH-Gruppe umgewandelt wird. Verbindungen mit diesen Gruppen werden vor allem dann eingesetzt, wenn die entsprechenden 1-Hydroxy-2-amino-verbindungen schlecht kuppeln.

In bevorzugten Farbstoffen der Formel I bedeutet A den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist.

Der Rest B leitet sich vorzugsweise von folgenden Gruppen von Kupplungs-komponenten ab : gegebenenfalls durch niedermolekulares Alkyl oder Alkoxy, Dialkylamino, oder Acylamino substituierte, in o-Stellung kuppelnde Phenole, wobei Acylamino $C_1$-$C_4$-Alkanoylamino-, $C_1$-$C_4$-Alkylsulfonylamino-, $C_1$-$C_4$-Alkoxycarbonylamino-, Arolylamino- oder Arylsulfonylaminoreste bedeutet ; Naphthole, die gegebenenfalls mit $C_1$-$C_4$-Alkyl oder Alkoxy, Chlor, Amino, Acylamino oder Sulfo substituiert sind, wobei Acylamino dieselbe Bedeutung hat, die vorne angegeben ist ; 5-Pyrazolone oder 5-Aminopyrazole, vorzugsweise solche, die in 1-Stellung einen gegebenenfalls mit Chlor, Nitro, $C_1$-$C_4$-Alkyl- oder -Alkoxygruppen oder Sulfogruppen substituierten Phenyl- oder Naphthylrest besitzen und in 3-Stellung eine $C_1$-$C_4$-Alkyl- oder Carboxylgruppe, insbesondere eine Methylgruppe aufweisen ; Naphthylamine, die gegebenenfalls mit Sulfo- Sulfonamido- oder Sulfogruppen substituiert sind ; Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl- oder Alkoxy- oder Sulfogrupen substituiert sein können ; 6-Hydroxy-3-cyano- oder 6-Hydroxy-3-carbonamido-4-alkyl-2-pyridone, die in 1-Stellung durch gegebenenfalls substituiertes $C_1$-$C_4$-Alkyl, z. B. Methyl, Isopropyl, β-Hydroxyethyl, β-Aminoethyl oder γ-Isopropoxypropyl oder durch Phenyl substituiert sind, und in 4-Stellung eine $C_1$-$C_4$-Alkylgruppe, insbesondere Methyl, tragen können, oder Hydroxychinoline.

Beispiele solcher Kupplungskomponenten sind :

2-Naphthol, 1-Naphthol, 1-Acetylamino-7-naphthol, 1-Propionylamino-7-naphthol, 1-Carboxymethoxylamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure, 1-Naphthol-3-, -4- oder -5- sulfosäure, 1-Naphthol-3,6- oder -4,8-disulfosäure, 2-Naphthol-6,8-disulfosäure, 4-Methyl-1-naphthol, 4-Methoxy-1-naphthol, 4-Acetyl-1-naphthol, 5,8-Dichlor-1-naphthol, 5-Chlor-1-naphthol, 2-Naphthylamin, 2-Naphthylamin-1-sulfosäure, 1-Naphthylamin-4- oder -5-sulfosäure, 2-Amino-naphthalin-6-sulfosäure, 2-Aminonaphthalin-5-sulfosäure, 6-Methylsulfonyl-2-aminonaphthalin, 1-Phenyl-3-methyl-pyrazol-5-on, 1-Phenyl-5-pyrazolon-3-carbonsäureamid, 1-(2'-, 3'- oder 4'-Methylphenyl)-3-methylpyrazol-5-on, 1-(2'-, 3' oder 4'-Sulfophenyl)-3-methylpyrazol-5-on, 1-(2'-Chlor-5'-sulfophenyl)-3-methyl-pyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-, 3'- oder 4'-Nitrophenyl)-3-methylpyrazol-5-on, 1-(2',5'- oder 3'-4'-Dichlorphenyl)-3-methylpyrazol-5-on, 1-(2',5'-Dichlor-4'-sulfophenyl)-3-methylpyrazol-5-on, 1-(2'-, 3'- oder 4'-Sulfophenyl)-3-methyl-5-aminopyrazol, 1-Phenyl-3-methyl-5-aminopyrazol, 1-(2'-Chlor-5'-sulfophenyl)-3-methyl-5-aminopyrazol, Acetoacetanilid, Acetoacetanilid-4-sulfosäure, Acetoacet-o-anisidid, Acetoacet-o-toluidid, Acetoaceto-o-chloranilid, Acetoacet-m-xylidid, Tetralol, 4-Methylphenol, 3-Dialkylaminophenole, besonders 3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxypyridon, 1-Methyl-3-cyano-4-methyl-6-hydroxypyridin, 1-Phenyl-3-carbonamido-4-methyl-6-hydroxypyridon, 1-Ethyl-4-hydroxy-2-chinolon.

Vorzugsweise stellt die Kupplungskomponente B ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann..

Besonders bevorzugte Kupplungskomponenten sind die Aminonaphtholsulfonsäuren, insbesondere 2-Amino-5-hydroxynaphthalin-sulfonsäure und vor allem 2-Amino-8-hydroxynaphthalin-6-sulfonsäure.

Im Azomethinfarbstoff der 1 : 2-Chromkomplexe der oben angegebenen Formel I kann der Ring D weitere Substituenten tragen.

Vorzugsweise ist der Ring D unsubstituiert oder ein- oder zweimal durch Sulfo, Nitro, Halogen, $C_1$-$C_4$-Alkyl, $C_1$-$C_4$-Alkoxy, $C_1$-$C_4$-Alkylsulfonyl oder Sulfonamid substituiert.

Der Rest D leitet sich beispielsweise von folgenden Aminen ab :

2-Amino-1-hydroxybenzol, 4-Chlor- und 4,6-Dichlor-2-amino-1-hydroxybenzol, 4- Nitro-2-amino-1-hydroxybenzol, 4-Chlor- und 4-Methyl-6-nitro-2-amino-1-hydroxybenzol, 6-Acetylamino- und 6-Chlor-4-nitro-2-amino-1-hydroxybenzol, 4-Sulfonamido-2-amino-1-hydroxybenzol, 4-Methylsulfonyl-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 3,4,6-Trichlor-2-amino-1-hydroxybenzol, 4,6-Dinitro-2-amino-1-hydroxybenzol, 2-Amino-1-hydroxybenzol-4- oder -5-sulfosäure, 2-Amino-1-hydroxybenzol-4,6-disulfosäure, 4-Nitro-2-amino-1-hydroxybenzol-6-sulfosäure, 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 4-Methylsulfonyl-6-nitro-2-amino-1-hydroxybenzol, 6-Methyl-2-amino-1-hydroxybenzol-4-sulfosäure.

In besonders bevorzugten Farbstoffen ist der Ring D ein 1-Hydroxy-2-aminobenzol, welches gegebenenfalls durch Nitro, Sulfo, Halogen, wie Brom oder vor allem Chlor, Methyl oder Methoxy weitersubstituiert ist.

Ar bedeutet den Rest eines gegebenenfalls substituierten heterocyclischen oder carbocyclischen aromatischen Amins, welcher mindestens zwei Sulfogruppen trägt. Vorzugsweise handelt es sich um einen Benzol- oder Naphthalinrest der zwei oder drei Sulfogruppen trägt.

Als Amine $Ar-NH_2$ kommen z. B. in Frage :

1-Aminobenzol-2,4-disulfonsäure, 1-Aminobenzol-2,5-disulfonsäure, 1-Amino-6-nitrobenzol-2,4-disulfonsäure, 1-Aminonaphthalin-3,6-disulfonsäure, 1-Aminonaphthalin-2,5,7-trisulfonsäure, 2-Aminonaphthalin-1,5-, -3,6-, -4,8-, -5,7- oder -6,8-disulfonsäure, 2-Aminonaphthalin-3,6,8- oder -4,6,8-trisulfonsäure.

Vorzugsweise handelt es sich um Aminobenzoldisulfonsäuren oder um Aminonaphthalintrisulfonsäure.

Besonders bevorzugt sind 1-Aminobenzol-2,4- und 2,5-disulfonsäure, 2-Amino-naphthalin-4,8-disulfonsäure sowie 2-Aminonaphthalin-4,6,8-trisulfonsäure.

Die Chromkomplexfarbstoffe der Formel I enthalten 2 bis 7, vorzugsweise 2, 3, 4 oder 5 Sulfogruppen.

m bedeutet 1 oder vorzugsweise 0.

$Ka^{\oplus}$ bedeutet vorzugsweise Lithium, Kalium oder vor allem Natrium. Ausserdem kann $Ka^{\oplus}$ ein Ammoniumkation oder das Ammoniumsalz eines organischen Amins sein.

Erfindungsgemäss bevorzugt sind Farbstoffe der Formel II

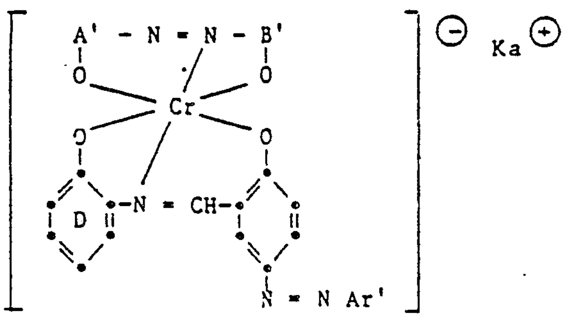

(II)

die 2, 3, 4 oder 5 Gruppen der Formel $—SO_3^{\ominus}Ka^{\oplus}$ aufweisen, und worin

A' den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' den Rest eines gegebenenfalls durch Amino und/oder Sulfo substituierten 1- oder 2-Naphthols, eines 1- oder 2-Naphthylamins, gegebenenfalls substituiert durch Sulfo, eines p-Alkyl($C_1$-$C_6$)-phenols, 1-Phenyl-3-methyl-5-pyrazolons oder Acetessigsäureanilids bedeutet, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,

Ar' einen Benzol- oder Naphthalinrest, der zwei oder drei Sulfogruppen trägt,
und

$Ka^{\oplus}$ ein Kation bedeutet,

wobei der Ring D gegebenenfalls weitersubstituiert ist durch Sulfo, Nitro, Chlor, Methyl oder Methoxy mit der Massgabe, dass sich keine Nitrogruppe in der 5-Position des 1-Hydroxy-2-aminobenzolrests D befindet.

Unter diesen sind diejenigen besonders bevorzugt, bei denen A' den Rest von 2-Amino-4-nitro-6-sulfo-1-hydroxybenzol und B' den Rest von 2-Amino-6-sulfo-8-hydroxynaphthalin bedeutet.

Die erfindungsgemässen Farbstoffe können nach an sich bekannten Methoden hergestellt werden, beispielsweise indem man den 1 : 1-Chromkomplex des Azofarbstoffes herstellt und diesen dann mit dem Arylazo-Azomethinfarbstoff oder vorzugsweise mit einen Gemisch des entsprechenden Amins und Aldehyds umsetzt.

Die Herstellung des 1 : 1-Chromkomplexes wird nach an sich bekannten Methoden, vorzugsweise in saurer Lösung mit Chrom-III-salzen durchgeführt. Anschliessend wird der 1 : 1-Chromkomplex in schwach saurem, neutralem oder schwach alkalischem Medium zum 1 : 2-Chromkomplex umgesetzt.

Die nach dem obigen Verfahren erhältlichen neuen Metallkomplexfarbstoffe der Formel I werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe, gegebenenfalls in Gegenwart eines Egalisierhilfsmittels, vor allem aber zum Färben und Bedrucken stickstoffhaltiger Materialien, wie Seide, Wolle, sowie auch für synthetische Fasern aus Polyamiden oder Polyurethanen und insbesondere für Leder.

Man erhält orange oder braune bis olive Färbungen mit guten Echtheiten, insbesondere Licht- und Nassechtheiten.

Die bevorzugte Verwendung der erfindungsgemässen Farbstoffe liegt im Färben von Pelzen oder Leder, wobei alle Ledersorten geeignet sind, z. B. Chromleder, nachgegerbtes Leder oder Velourleder

von Ziege, Rind oder Schwein. Die erfindungsgemässen Farbstoffe eignen sich besonders zum Färben von Velourleder, da sie gut egalisieren und gut eindringen.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

Beispiel 1

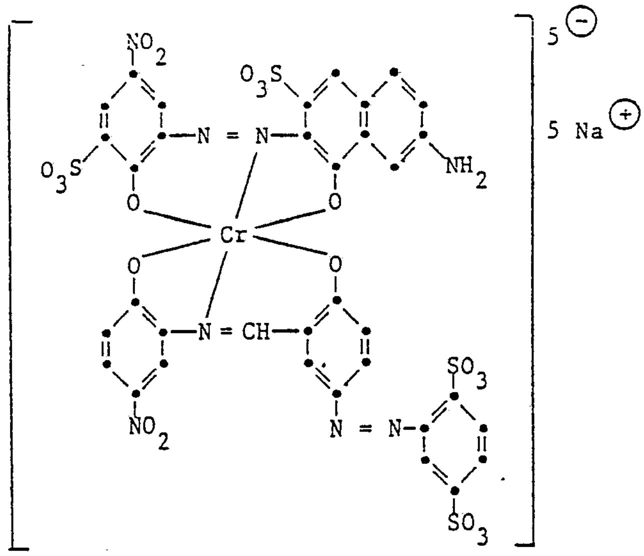

In 600 Teilen Wasser suspendiert man 53,4 Teile der komplexen Chromverbindung vom Typus 1 Atom Chrom : 1 Molekül Farbstoff, welche 5,2 Teile Chrom und 48,4 Teile Monoazofarbstoff aus diazotierter 4-Nitro-2-amino-1-hydroxybenzol-6-sulfonsäure und 2-Amino-8-hydroxynaphthalin-6-sulfonsäure enthält, mit 15,4 Teilen 4-Nitro-2-amino-1-hydroxybenzol und 38,6 Teilen des Monoazofarbstoffs aus diazotierter 1-Aminobenzol-2,5-disulfonsäure und Salicylaldehyd. Das Reaktionsgemisch wird hierauf auf 80 bis 85° erwärmt, mit Natriumhydroxid auf pH 7,5 gestellt und so lange bei dieser Temperatur und konstantem pH gehalten, bis die Ausgangsprodukte nich mehr nachweisbar sind. Nach beendeter Reaktion wird der Farbstoff durch Eindampfen isoliert. Man erhält ein dunkles Pulver, das sich in Wasser mit oliver Farbe löst und Leder in oliven Tönen von guten Echtheiten färbt.

Beispiel 2

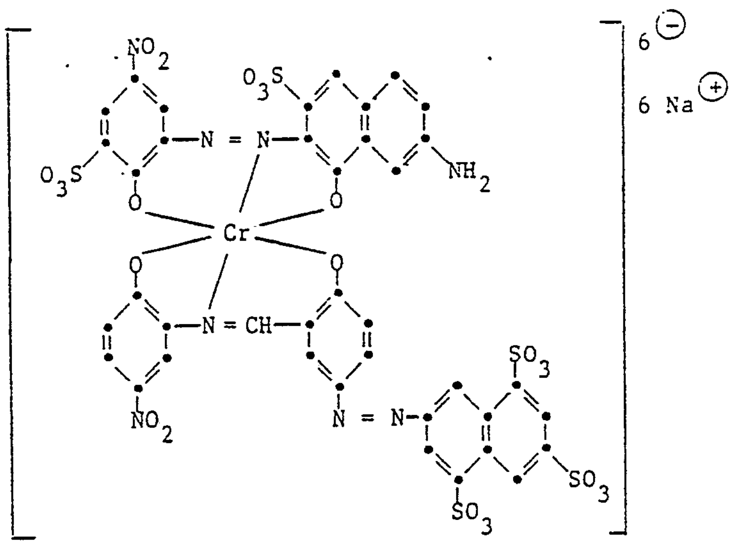

Der 1 : 1-Chromkomplex, der 48,4 Teile des Farbstoffes aus diazotierter 4-Nitro-2-amino-1-hydroxybenzol-6-sulfonsäure und 2-Amino-8-hydroxynaphthalin-6-sulfonsäure sowie 5,2 Teile Chrom enthält, wird in 600 Teile Wasser eingetragen und mit 15,4 Teilen 4-Nitro-2-amino-1-hydroxybenzol und 51,6 Teilen des Monozofarbstoffes aus diazotierter 2-Aminonaphthalin-4,6,8-trisulfonsäure und Salicylaldehyd versetzt. Das Reaktionsgemisch wird auf 80 bis 95° erwärmt, mit Natriumhydroxid auf pH 7 gestellt und so

lange bei dieser Temperatur und konstantem pH gehalten, bis die Ausgangsprodukte nicht mehr nachweisbar sind. Nach beendeter Reaktion wird der Farbstoff durch Eindampfen isoliert. Man erhält ein dunkles Pulver, das sich in Wasser mit grünoliver Farbe löst und Leder in oliven Tönen von guten Echtheiten färbt.

Beispiel 3

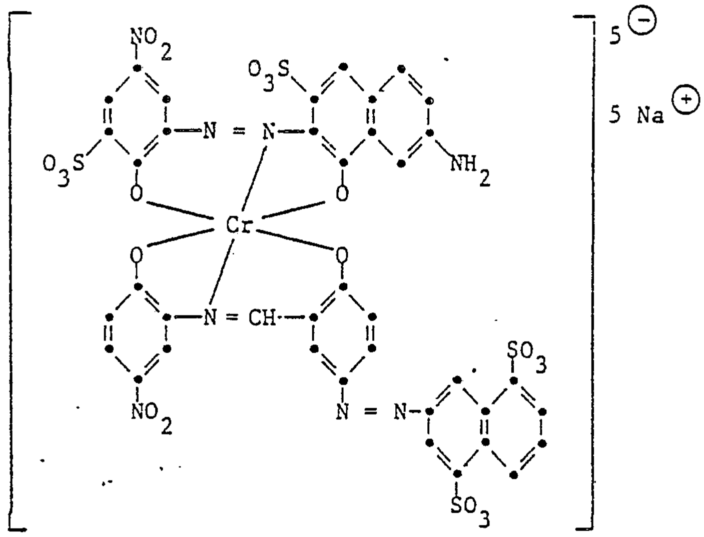

In 400 Teilen Wasser suspendiert man 53,4 Teile der komplexen Chromverbindung vom Typus 1 Atom Chrom: 1 Molekül Farbstoff, welche 5,2 Teile Chrom und 48,4 Teile Monoazofarbstoff aus diazotierter 4-Nitro-2-amino-1-hydroxybenzol-6-sulfonsäure und 2-Amino-8-hydroxynaphthalin-6-sulfonsäure enthält, mit 15,4 Teilen 4-Nitro-2-amino-1-hydroxybenzol und 43,6 Teilen des Monoazofarbstoffes aus diazotierter 2-Aminonaphthalin-4,8-disulfonsäure und Salicylaldehyd. Das Reaktionsgemisch wird auf 80 bis 85° erwärmt, mit Natriumhydroxid auf pH 7 bis 7,5 gestellt und so lange bei dieser Temperatur und konstantem pH gehalten, bis die Ausgangsprodukte nicht mehr nachweisbar sind. Nach beendeter Reaktion wird der Farbstoff durch Eindampfen isoliert. Er stellt ein dunkles Pulver dar, das sich in Wasser mit oliver Farbe löst und Leder in oliven Tönen von guten Echtheiten färbt.

Arbeitet man wie in den Beispielen 1 bis 3 beschrieben, verwendet jedoch den 1 : 1-Chromkomplex des in der folgenden Tabelle in Spalte 2 aufgeführten Azofarbstoffes und setzt diesen mit dem in Spalte 3 aufgeführten Azomethinfarbstoff, bzw. mit dem diesen bildenden Amin und Aldehyd um, so erhält man 1 : 2-Chromkomplexe, welche Leder in der in Spalte 4 angegebenen Nuance färben.

(Siehe Tabelle Seite 7 ff.)

Tabelle

| N° | Azofarbstoff | Azomethinfarbstoff | Nuance |
|---|---|---|---|
| 1 | 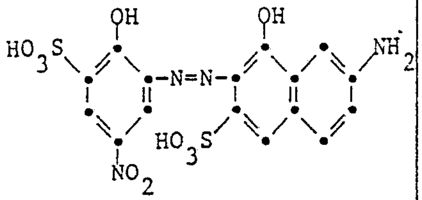 | 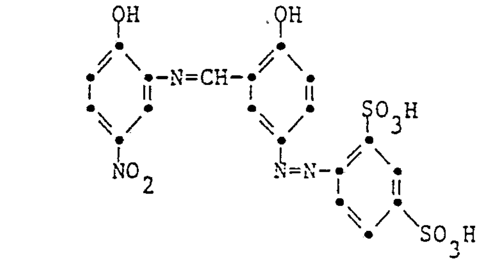 | olive |
| 2 | do | 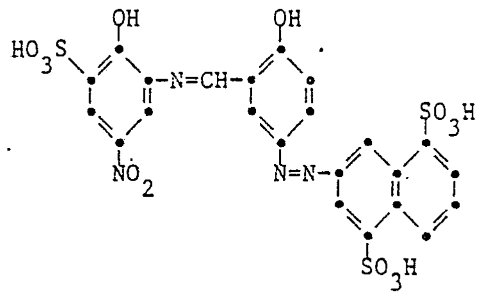 | olive |
| 3 | do | 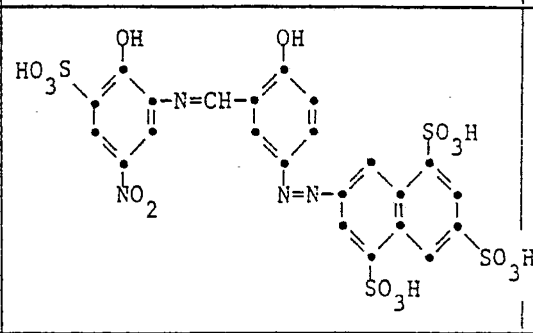 | olive |
| 4 | do | 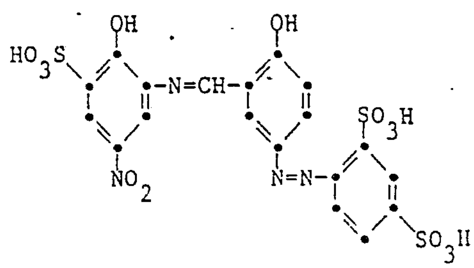 | olive |
| 5 | do | 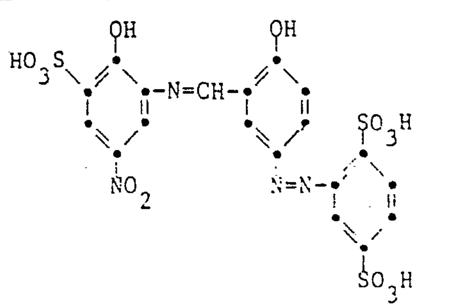 | olive |

Tabelle (Fortsetzung)

| N° | Azofarbstoff | Azomethinfarbstoff | Nuance |
|---|---|---|---|
| 6 | 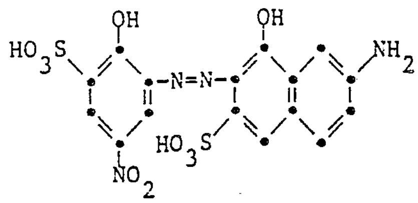 | 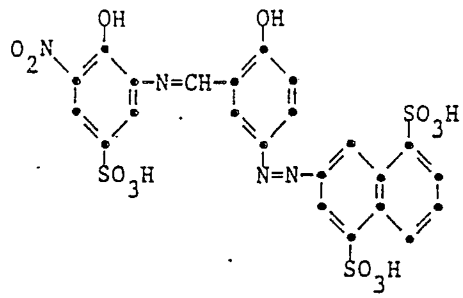 | olive |
| 7 | do | 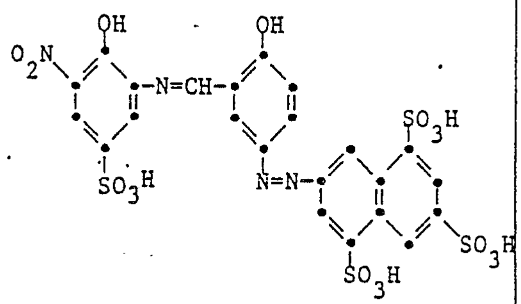 | olive |
| 8 | do | 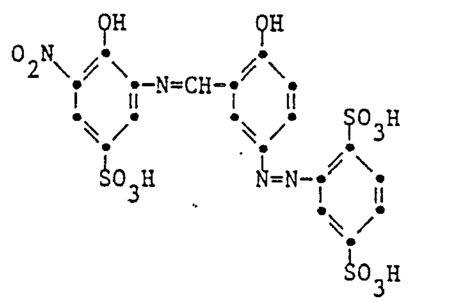 | olive |
| 9 | do | 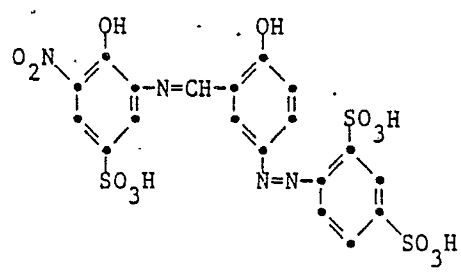 | olive |
| 10 | do | 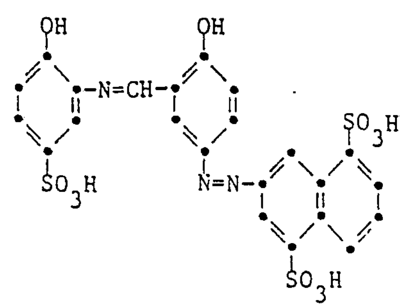 | olive |

Tabelle (Fortsetzung)

| N° | Azofarbstoff | Azomethinfarbstoff | Nuance |
| --- | --- | --- | --- |
| 11 | 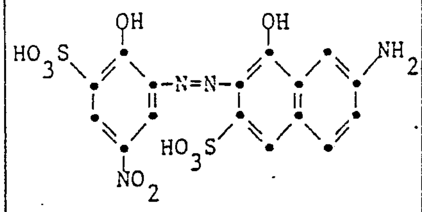 | 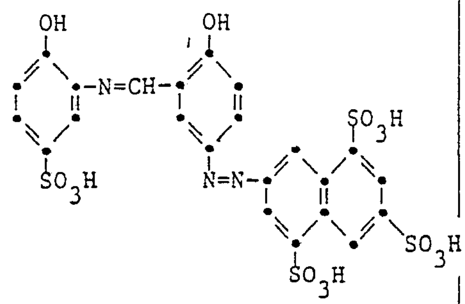 | olive |
| 12 | do | 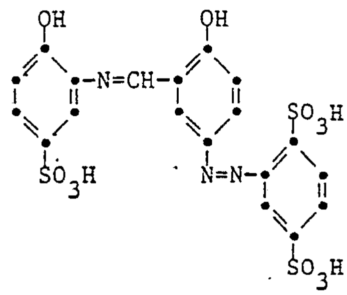 | olive |
| 13 | do | 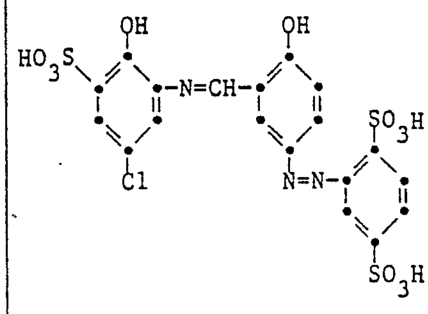 | olive |
| 14 | do | 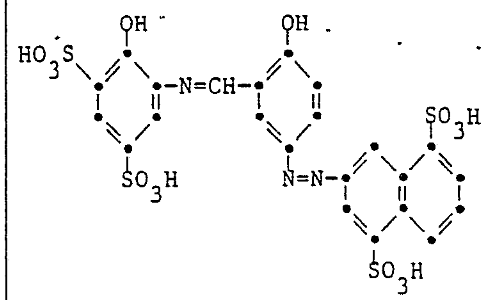 | olive |
| 15 | do | 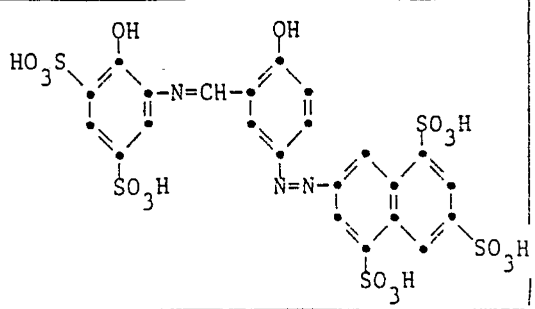 | olive |

Tabelle (Fortsetzung)

| N° | Azofarbstoff | Azomethinfarbstoff | Nuance |
|---|---|---|---|
| 16 | 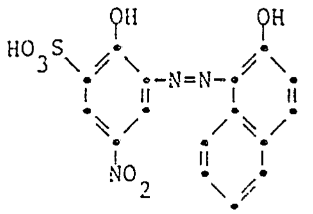 | 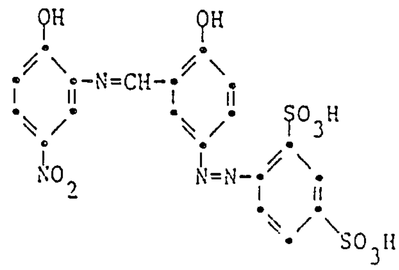 | braun |
| 17 | 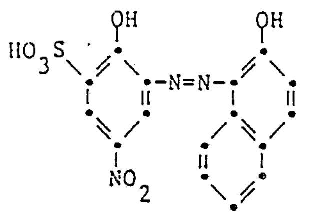 | 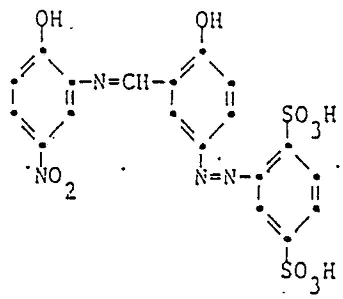 | braun |
| 18 | do | 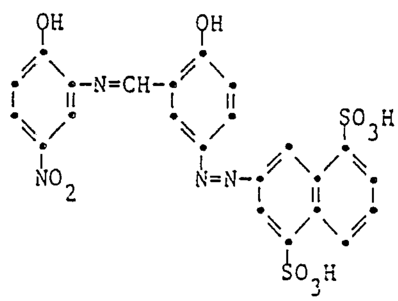 | braun |
| 19 | do | 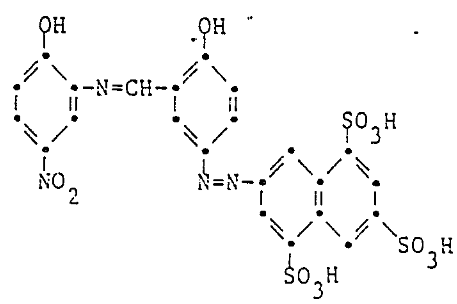 | braun |
| 20 | do | 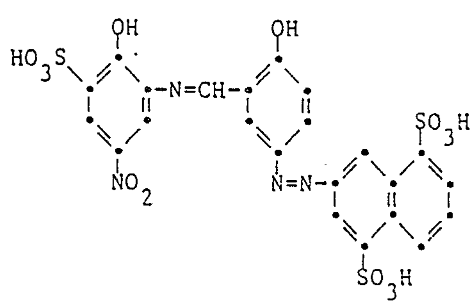 | braun |

Tabelle (Fortsetzung)

| N° | Azofarbstoff | Azomethinfarbstoff | Nuance |
|---|---|---|---|
| 21 | 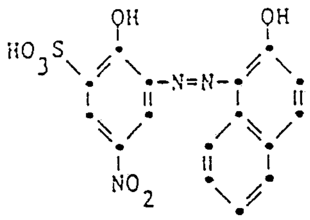 | 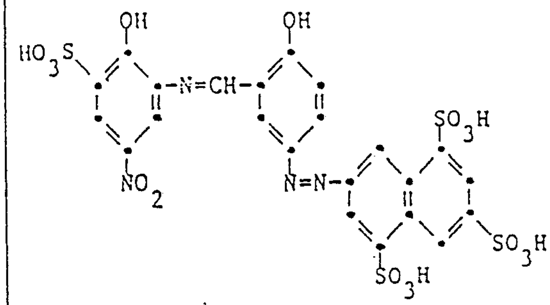 | braun |
| 22 | do | 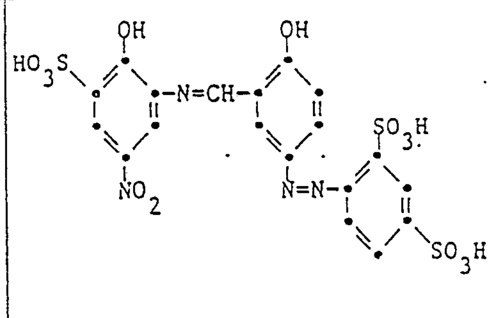 | braun |
| 23 | do | 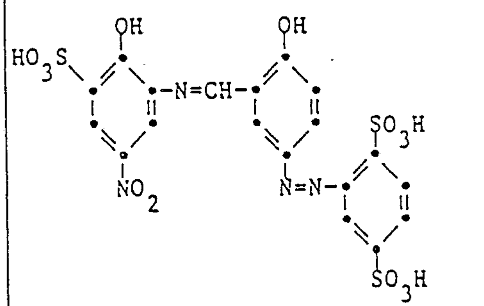 | braun |
| 24 | 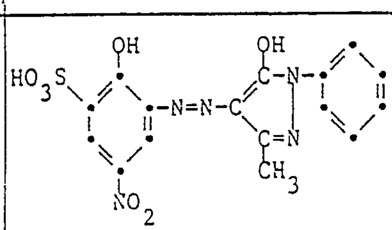 | 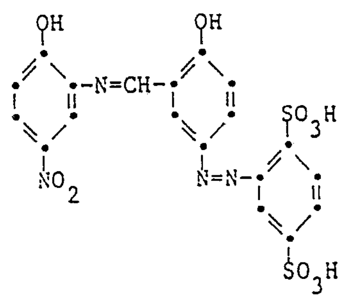 | orange |
| 25 | do | 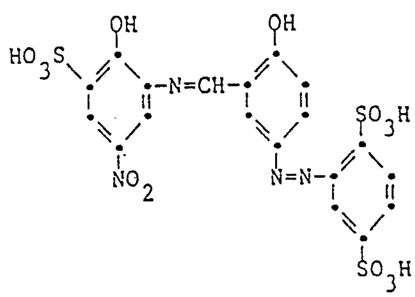 | orange |

Tabelle (Fortsetzung)

| N° | Azofarbstoff | Azomethinfarbstoff | Nuance |
|---|---|---|---|
| 26 | do | 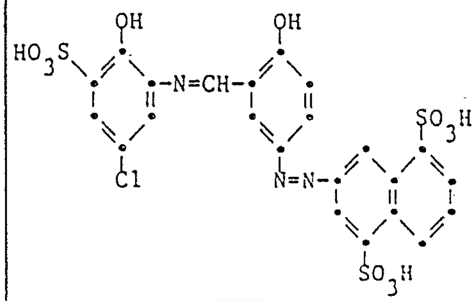 | orange |
| 27 | 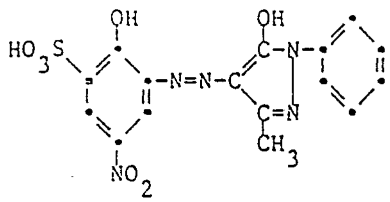 | 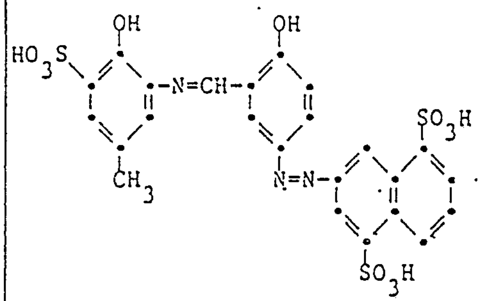 | orange |
| 28 | do | 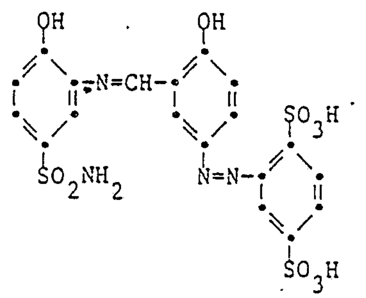 | orange |
| 29 | do | 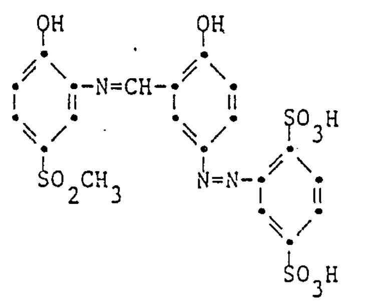 | orange |
| 30 | 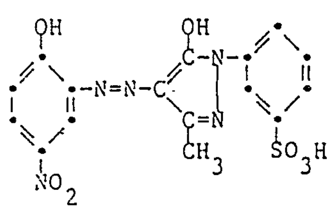 | 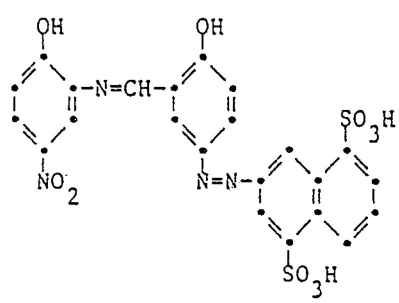 | orange |

Tabelle (Fortsetzung)

| N° | Azofarbstoff | Azomethinfarbstoff | Nuance |
|---|---|---|---|
| 31 | 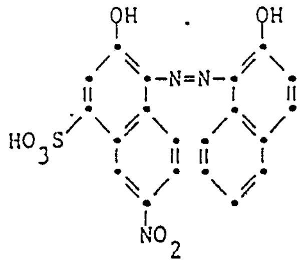 | 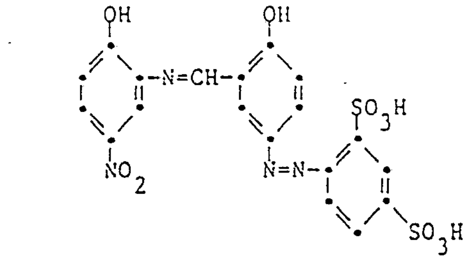 | olive-stichig braun |
| 32 | do | 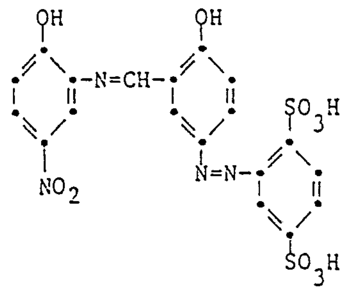 | do |
| 33 | do | 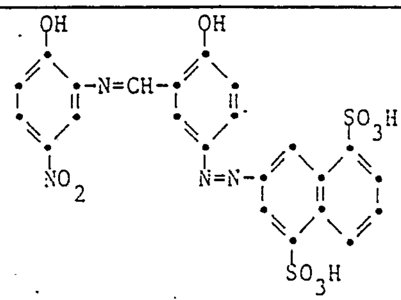 | do |
| 34 | do | 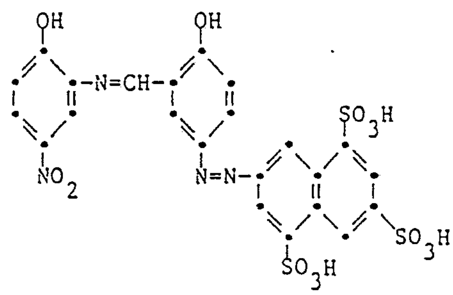 | do |
| 35 | do | 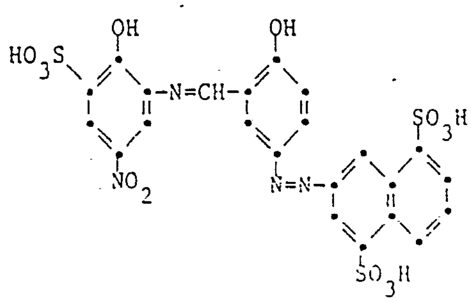 | do |

Tabelle (Fortsetzung)

| N° | Azofarbstoff | Azomethinfarbstoff | Nuance |
|---|---|---|---|
| 36 | 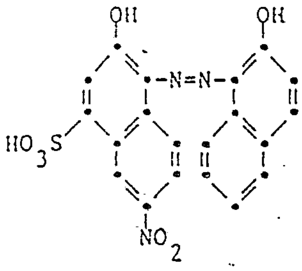 | 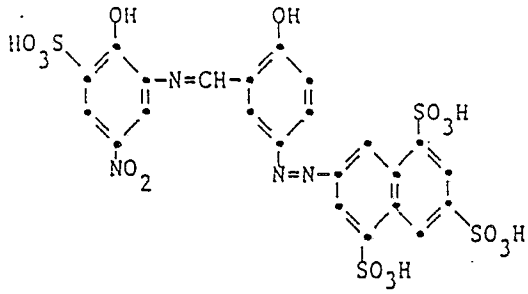 | olive-stichig braun |
| 37 | do | 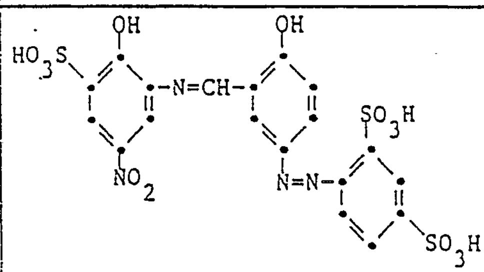 | braun-stichig olive |
| 38 | do | 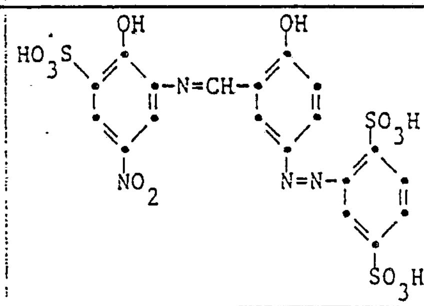 | do |
| 39 | do | 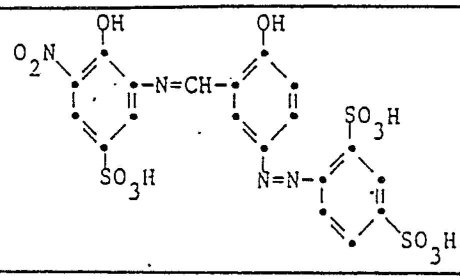 | grün-stichig braun |
| 40 | do | 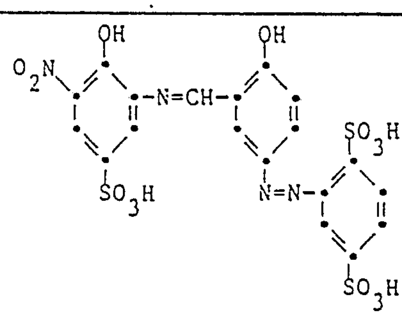 | do |
| 41 | do | 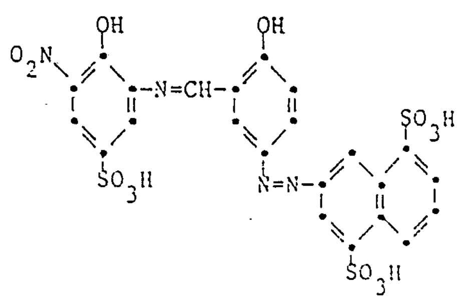 | do |

Tabelle (Fortsetzung)

| N° | Azofarbstoff | Azomethinfarbstoff | Nuance |
|---|---|---|---|
| 42 | 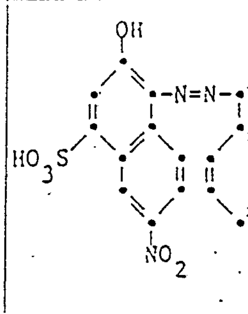 | 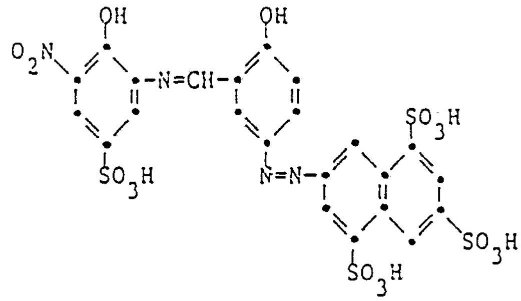 | braun |
| 43 | do | 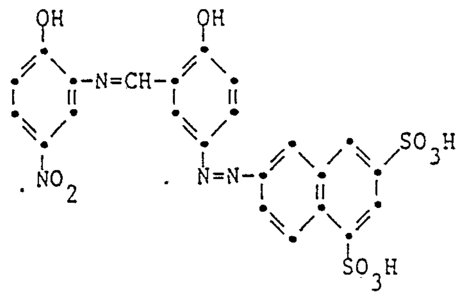 | olive-stichig braun |
| 44 | do | 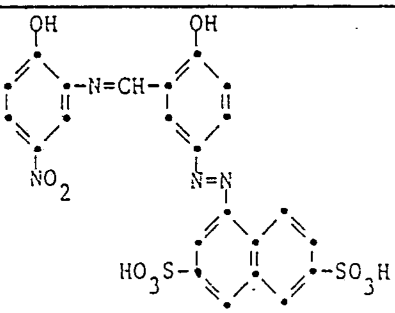 | do |
| 45 | do | 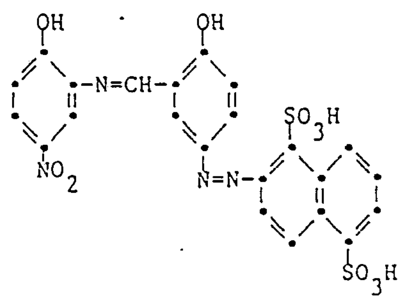 | do |
| 46 | do | 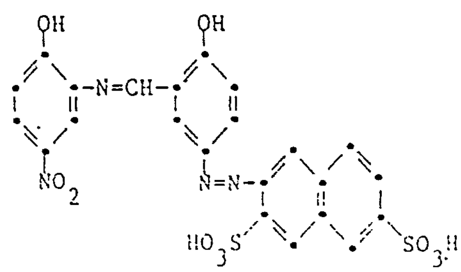 | do |

Tabelle (Fortsetzung)

| N° | Azofarbstoff | Azomethinfarbstoff | Nuance |
|---|---|---|---|
| 47 | 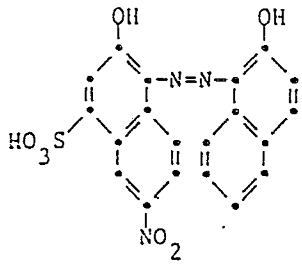 | 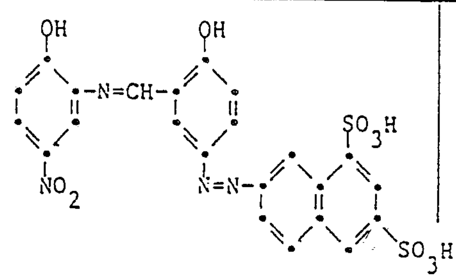 | olive-stichig braun |
| 48 | do | 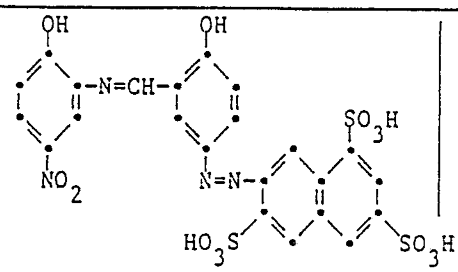 | do |
| 49 | do | 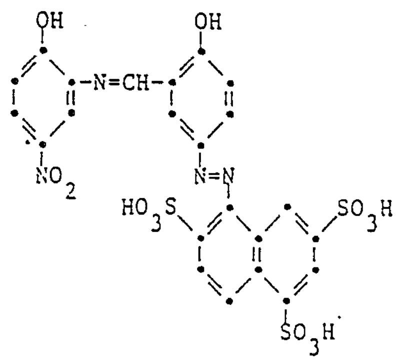 | do |
| 50 | do | 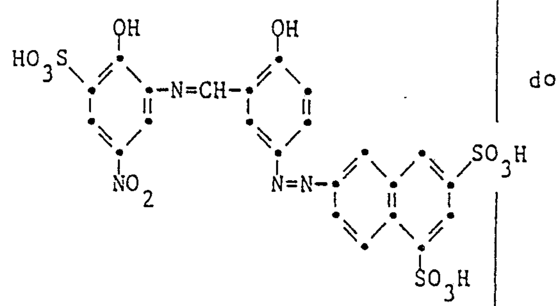 | do |
| 51 | 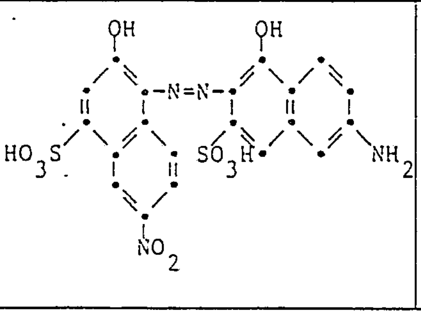 | 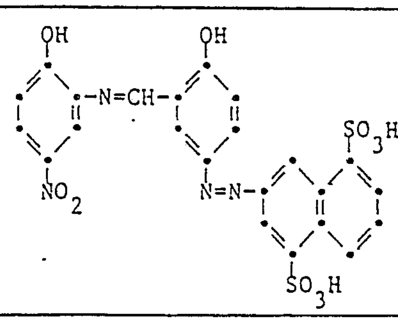 | olive |

Tabelle (Fortsetzung)

| N° | Azofarbstoff | Azomethinfarbstoff | Nuance |
|---|---|---|---|
| 52 | do | 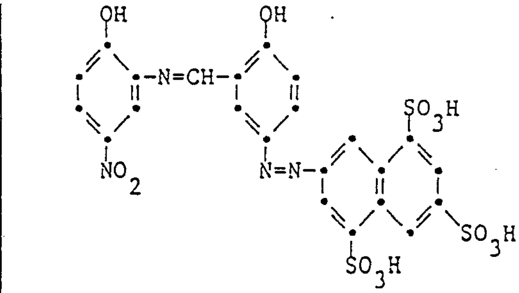 | olive |
| 53 | do | 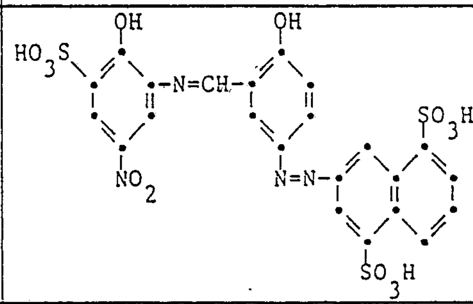 | olive |
| 54 | do | 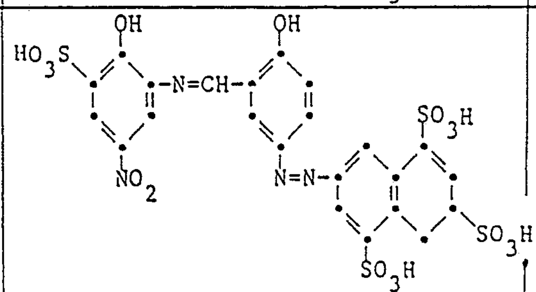 | olive |
| 55 | do | 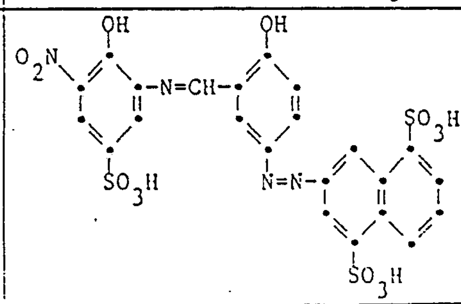 | olive |
| 56 | 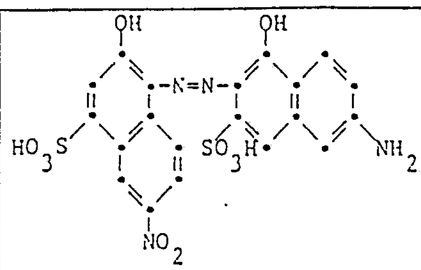 | 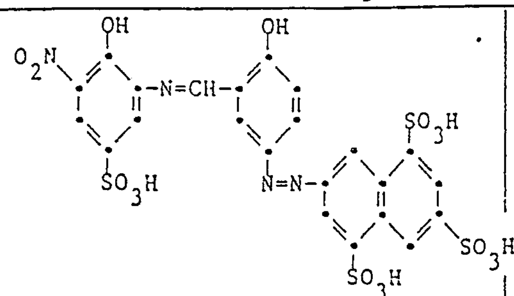 | olive |
| 57 | do | 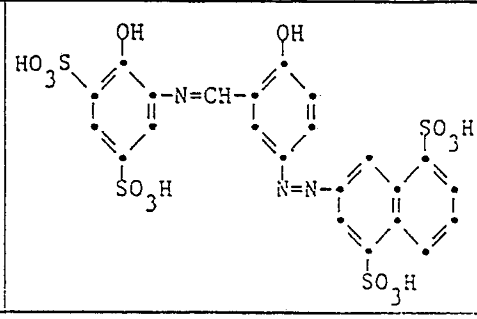 | olive |

Tabelle (Fortsetzung)

| N° | Azofarbstoff | Azomethinfarbstoff | Nuance |
|---|---|---|---|
| 58 | 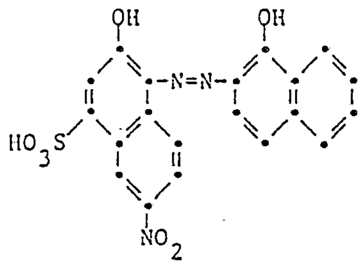 | 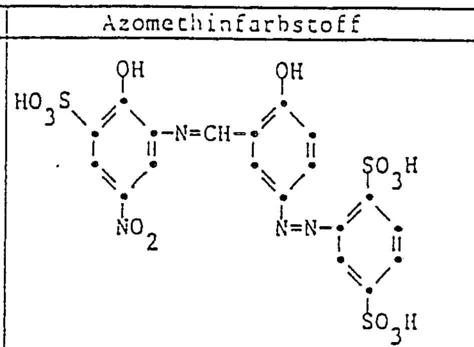 | olive-braun |
| 59 | do | 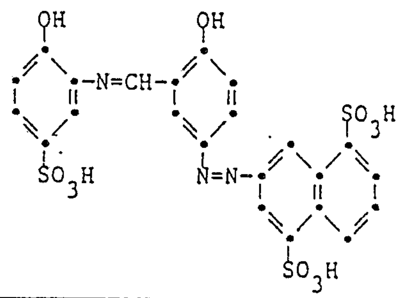 | braun |
| 60 | 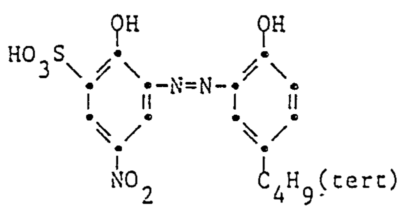 | do | braun |
| 61 | do | 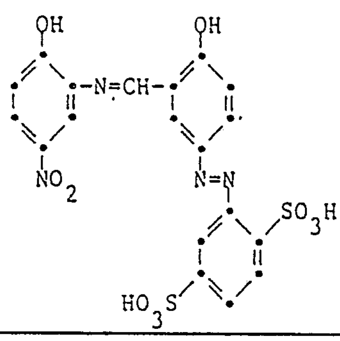 | braun |
| 62 | 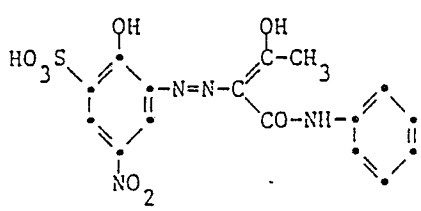 | 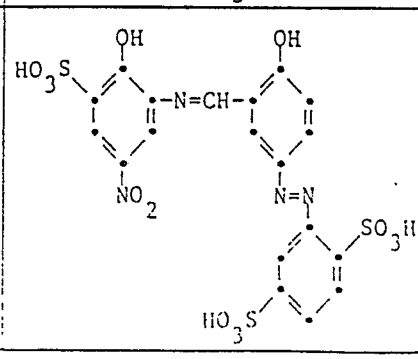 | orange-gelb |

Tabelle (Fortsetzung)

| N° | Azofarbstoff | Azomethinfarbstoff | Nuance |
|---|---|---|---|
| 63 | 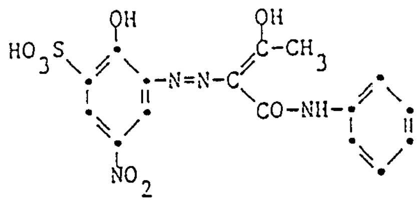 | 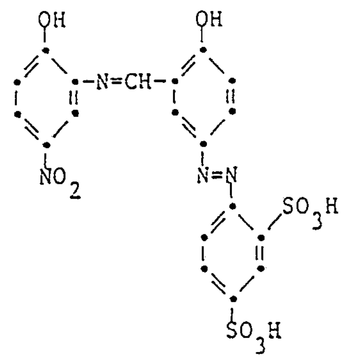 | orange-gelb |
| 64 | 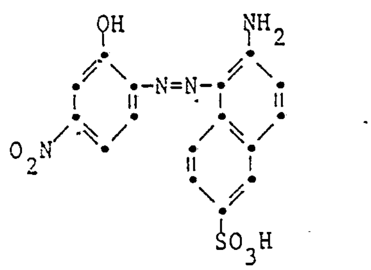 | 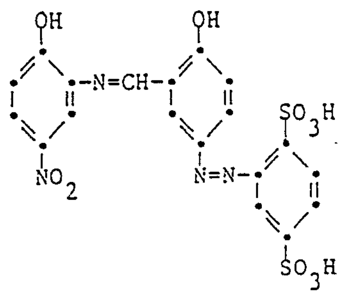 | olive |
| 65 | do | 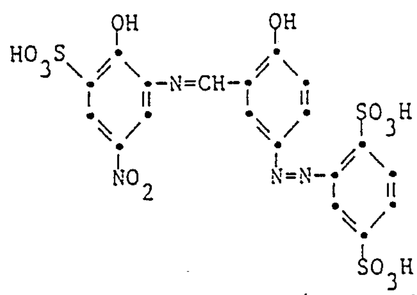 | olive |
| 66 | 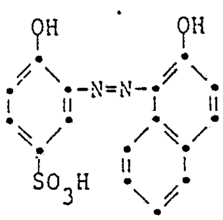 | 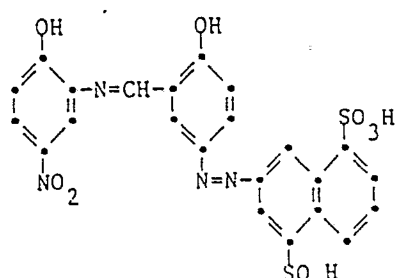 | braun |
| 67 | do | 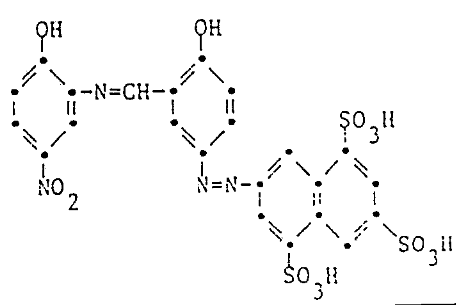 | braun |

Tabelle (Fortsetzung)

| N° | Azofarbstoff | Azomethinfarbstoff | Nuance |
|---|---|---|---|
| 68 | 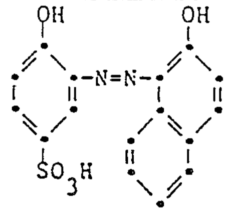 | 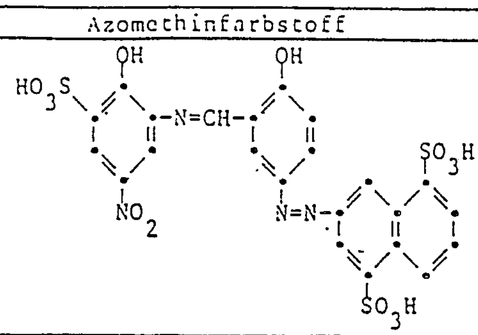 | braun |
| 69 | do | 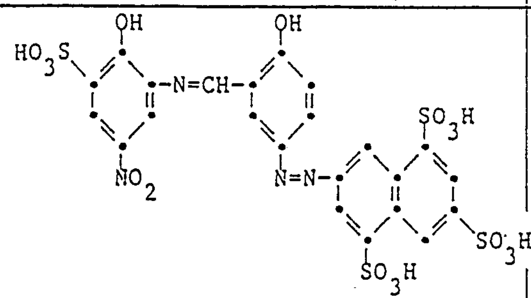 | braun |
| 70 | do | 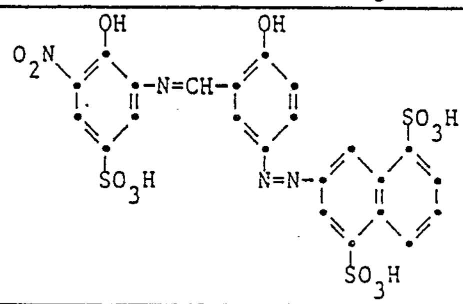 | braun |
| 71 | do | 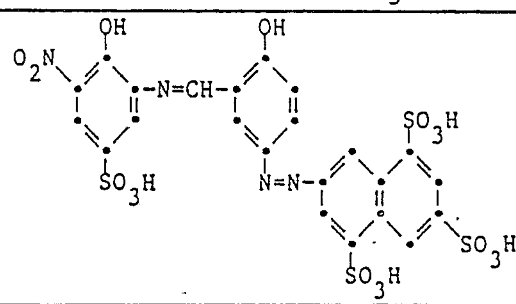 | braun |
| 72 | do | 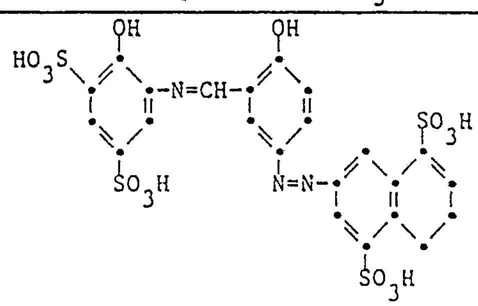 | braun |
| 73 | 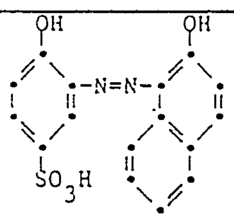 | 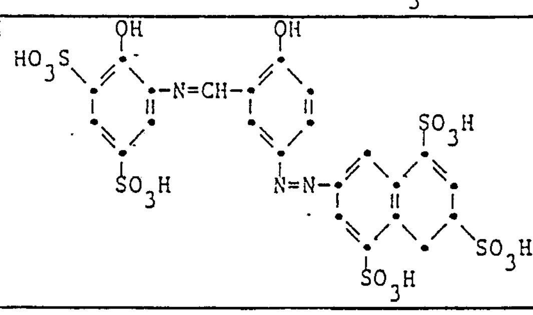 | braun |

Tabelle (Fortsetzung)

| N° | Azofarbstoff | Azomethinfarbstoff | Nuance |
|---|---|---|---|
| 74 | 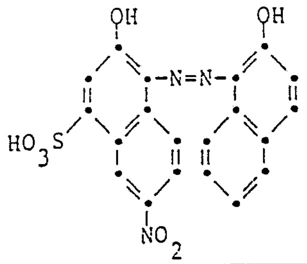 | 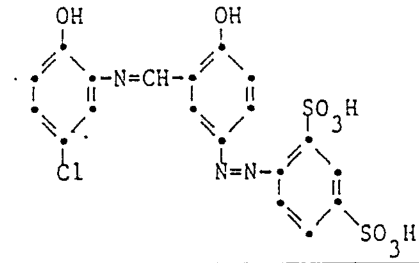 | braun |
| 75 | do | 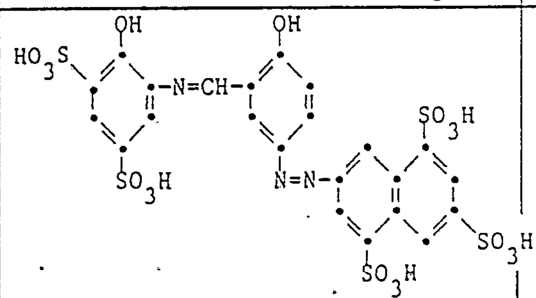 | braun |
| 76 | 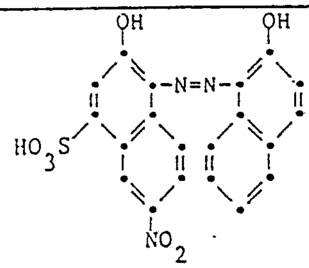 | 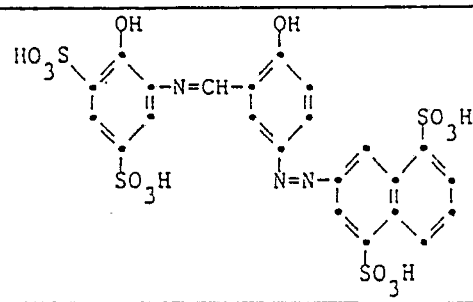 | braun |
| 77 | do | 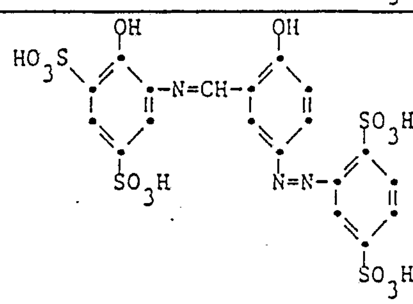 | braun |
| 78 | do | 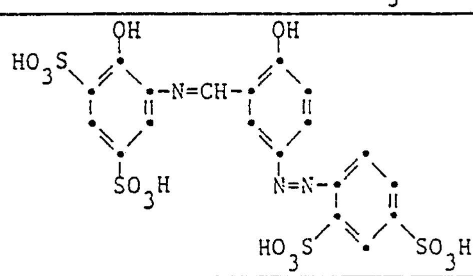 | braun |
| 79 | do | 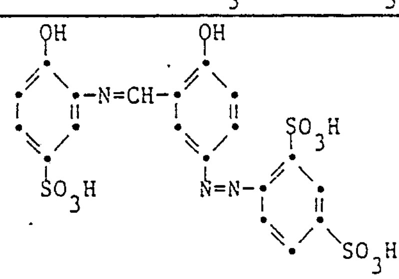 | braun |

Tabelle (Fortsetzung)

| N° | Azofarbstoff | Azomethinfarbstoff | Nuance |
|---|---|---|---|
| 80 | do | 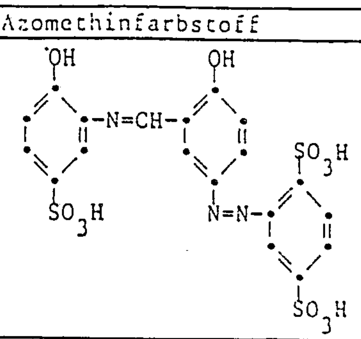 | braun |
| 81 | 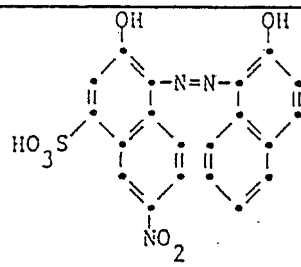 | 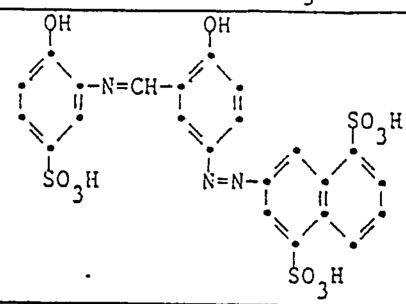 | braun |
| 82 | do | 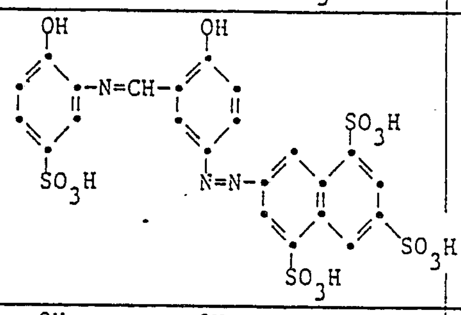 | olive-braun |
| 83 | do | 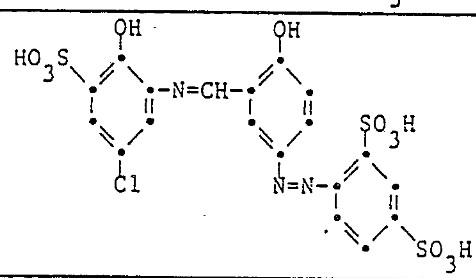 | grün-stichig braun |
| 84 | do | 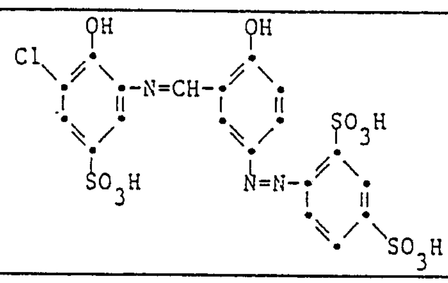 | braun |
| 85 | do | 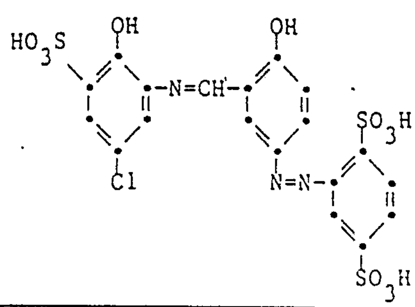 | braun |

Tabelle (Fortsetzung)

| N° | Azofarbstoff | Azomethinfarbstoff | Nuance |
|---|---|---|---|
| 86 | 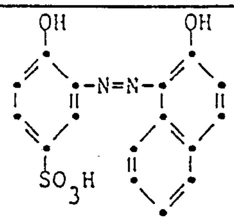 | 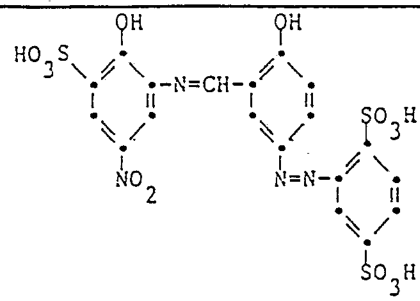 | braun |
| 87 | do | 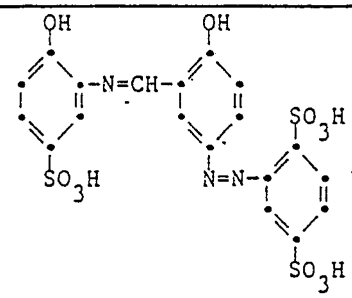 | braun |
| 88 | do | 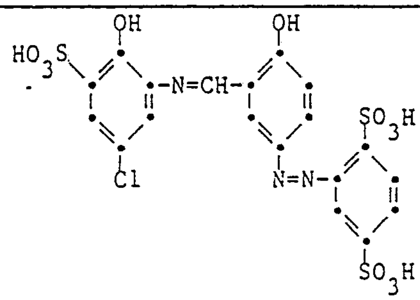 | braun |
| 89 | 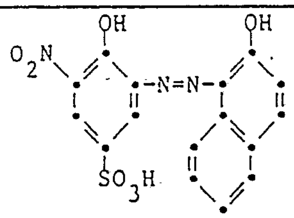 | 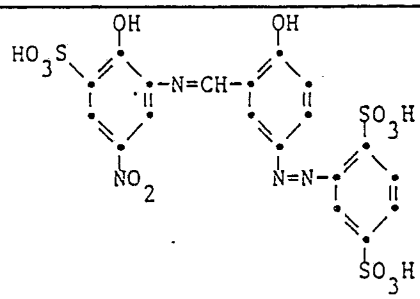 | braun-olive |
| 90 | do | 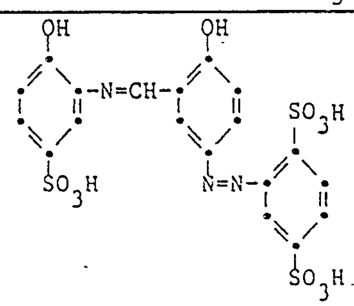 | do |

Tabelle (Fortsetzung)

| N° | Azofarbstoff | Azomethinfarbstoff | Nuance |
|---|---|---|---|
| 91 | 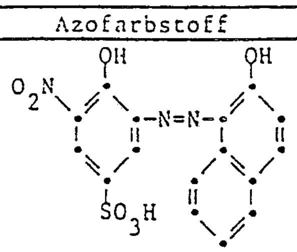 | 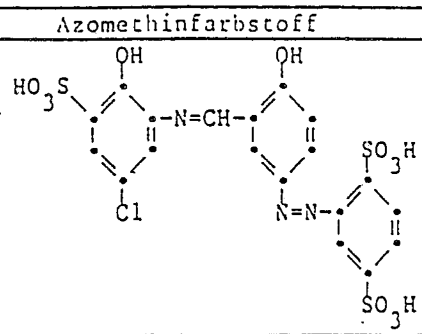 | braun-olive |
| 92 | 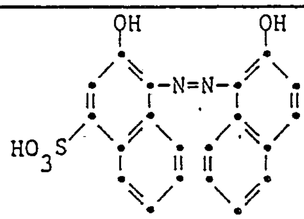 | 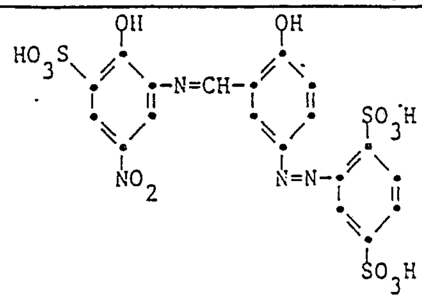 | olive |
| 93 | do | 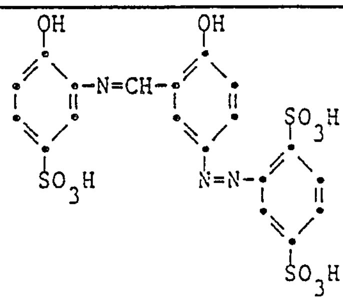 | olive |
| 94 | 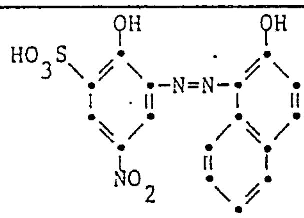 | 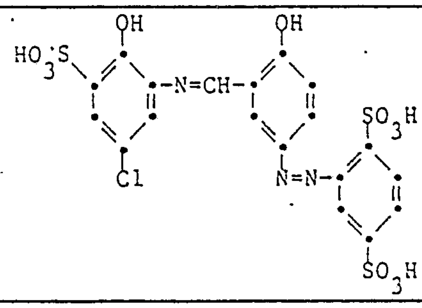 | braun |
| 95 | 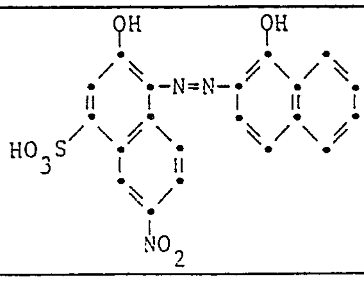 | do | grünstichig braun |

Tabelle (Fortsetzung)

| N° | Azofarbstoff | Azomethinfarbstoff | Nuance |
|---|---|---|---|
| 96 | 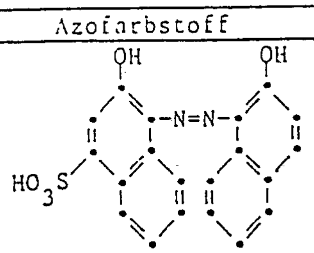 | 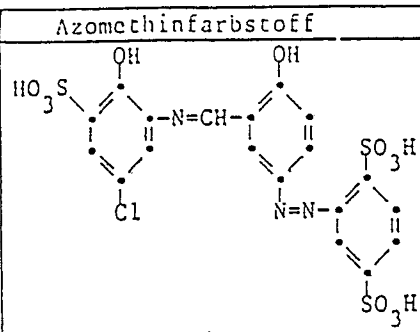 | olive |
| 97 | 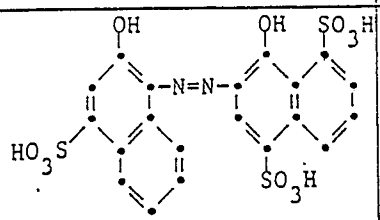 | 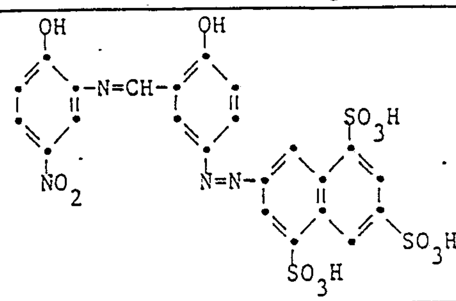 | olive |
| 98 | 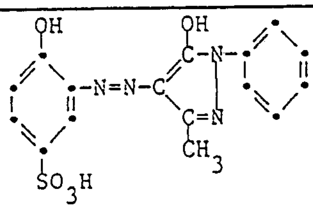 | 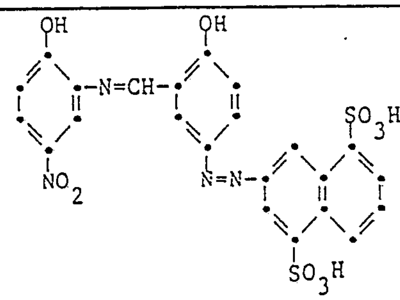 | orange |
| 99 | 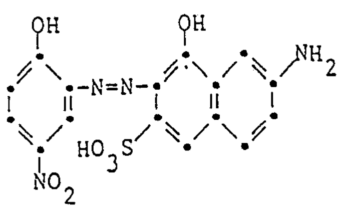 | 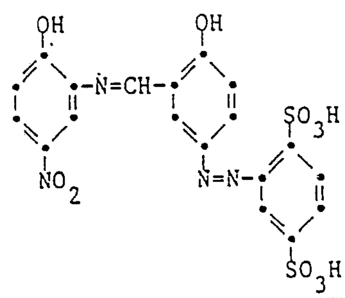 | olive |
| 100 | do | 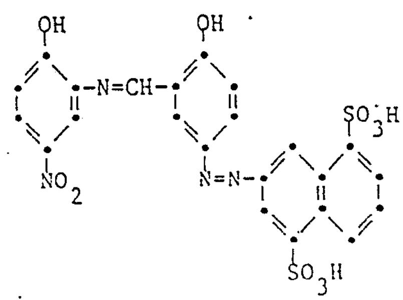 | olive |

Beispiel 4

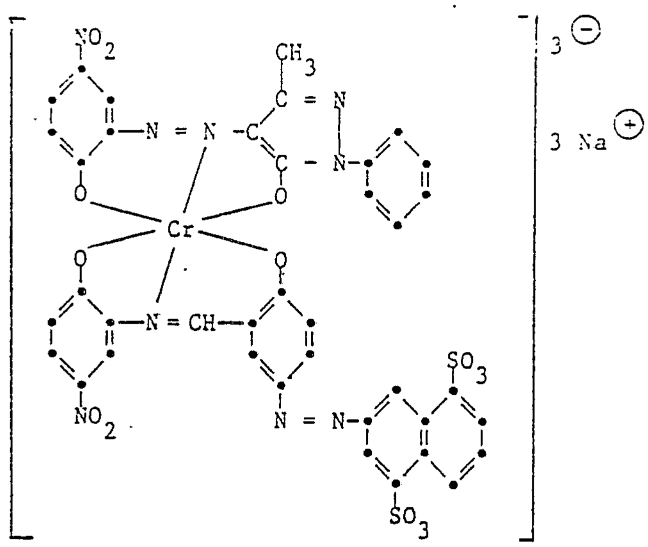

33,9 Teile des Monoazofarbstoffes aus diazotiertem 4-Nitro-2-amino-1-hydroxybenzol und 1-Phenyl-3-methyl-5-pyrazolon werden mit 26,65 Teilen Chromchloridhexahydrat in 400 Volumenteilen Aethylenglykol so lange bei 120 bis 125° gerührt, bis kein unchromierter Farbstoff mehr nachweisbar ist. Die Lösung des 1 : 1-Chromkomplexfarbstoffes wird hierauf mit 15,4 Teilen 4-Nitro-2-amino-1-hydroxybenzol und 43,6 Teilen des Monoazofarbstoffes aus diazotierter 2-Aminonaphthalin-4,8-disulfonsäure und Salicylaldehyd versetzt. Das Reaktionsgemisch wird auf 80 bis 85° erwärmt, mit Natriumhydroxid 5n auf pH 7,5 gestellt und so lange bei dieser Temperatur und konstantem pH gehalten, bis die Ausgangsprodukte verschwunden sind. Nach beendigter Reaktion wird der asymmetrische chromhaltige Farbstoff durch Zugabe von gesättigter Natriumchloridlösung ausgefällt, abfiltriert und getrocknet. Er stellt ein orangebraunes Pulver dar, das sich in Wasser mit oranger Farbe löst und Wolle oder Polyamidmaterial aus saurem Bade in echten orangen Tönen von guten Echtheiten färbt.

Arbeitet man wie im Beispiel 4 beschrieben, verwendet jedoch den 1 : 1-Chromkomplex des in der folgenden Tabelle in Spalte 2 aufgeführten Azofarbstoffes und setzt diesen mit dem in Spalte 3 aufgeführten Azomethinfarbstoff, bzw. mit dem diesen bildenden Amin und Aldehyd um, so erhält man 1 : 2-Chromkomplexe, welche Wolle in der in Spalte 4 angegebenen Nuance färben.

Tabelle

| N° | Azofarbstoff | Azomethinfarbstoff | Nuance |
|---|---|---|---|
| 1 | 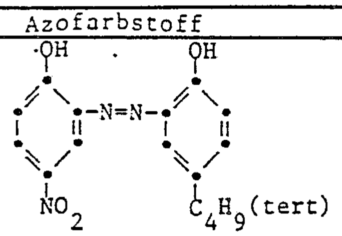 | 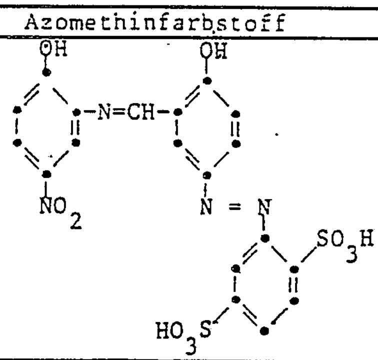 | braun |
| 2 | 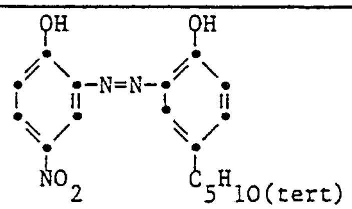 | 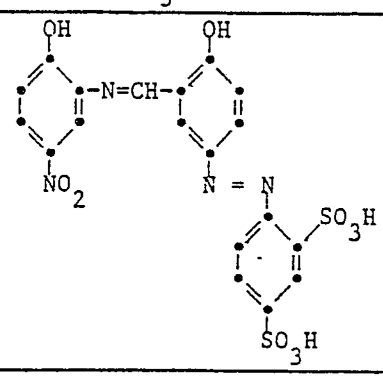 | braun |

Tabelle (Fortsetzung)

| N° | Azofarbstoff | Azomethinfarbstoff | Nuance |
|---|---|---|---|
| 3 | 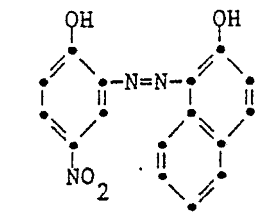 | 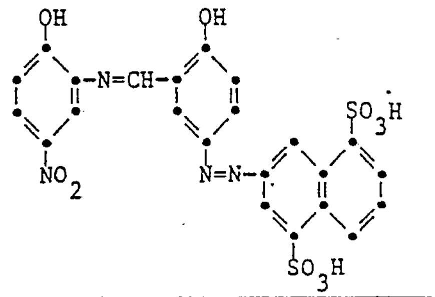 | braun |
| 4 | do | 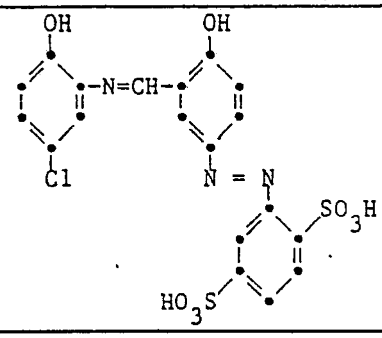 | braun |
| 5 | 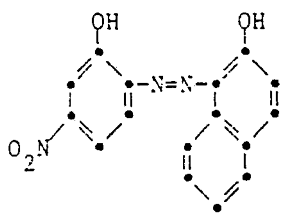 | 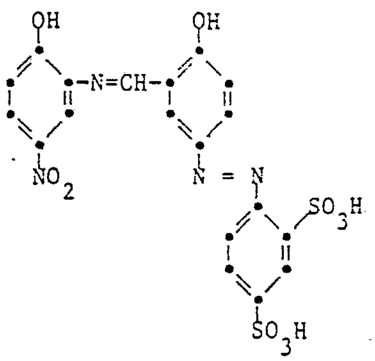 | olive |

Färbevorschrift für Leder

100 Teile Bekleidungsverloursleder (Trockengewicht) werden bei 50° in einer Lösung von 1 000 Volumenteilen Wasser und 2 Teilen Ammoniak 24 %ig während 2 Stunden aufgewalkt und anschliessend bei 60° in einer Lösung von 1 000 Volumenteilen Wasser, 2 Teilen Ammoniak 24 %ig und 6 Teilen Farbstoff aus Beispiel 2 während 1 Stunde gefärbt. Hierauf gibt man eine Lösung von 40 Volumenteilen Wasser und 4 Teilen Ameisensäure 85 %ig zu und färbt noch weitere 30 Minuten. Dann wird das Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen oliven Färbungen zeichnen sich durch Echtheiten und gute Deckvermögen aus.

Färbevorschrift für Polyamid

100 Teile Polyamidstrickgarn werden bei 50° in ein Färbebad eingeführt, das aus 4 000 Teile Wasser 2 Teile des Farbstoffes des Beispiels 4, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein orange gefärbtes Polyamid mit guten Echtheitseigenschaften.

Färbevorschrift für Wolle

100 Teile Wollstrickgarn werden bei 50° in ein Färbebad eingeführt, das auf 4 000 Teile Wasser

2 Teile Farbstoff des Beispiels 4, 4 Teile Essigsäure 80 % und 2 Teile eines Egalisierhilfsmittels enthält. Die Flotte wird im Verlaufe von 45 Minuten zum Sieden gebracht und während 45 Minuten bei Kochtemperatur gehalten. Darauf wird das Färbegut herausgenommen, mit kaltem Wasser gründlich gespült und getrocknet. Man erhält eine orangegefärbte Wolle mit guten Echtheitseigenschaften.

**Patentansprüche**

1. 1 : 2-Chromkomplexfarbstoffe der Formel I

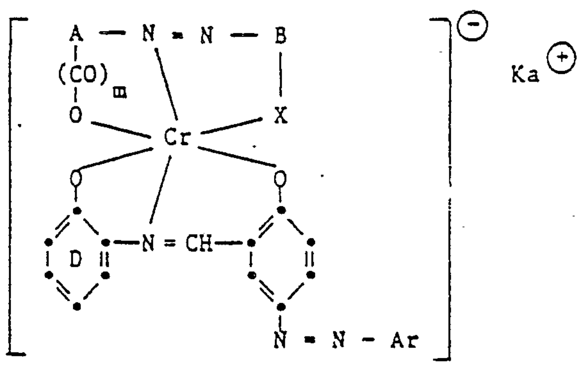

. (I)

die 2 bis 7 Gruppen der Formel $—SO_3^{\ominus}Ka^{\oplus}$ aufweisen, und worin

A den Rest einer Diazokomponente der Benzol- oder Naphthalinreihe, welche die Hydroxy- oder Carboxygruppe in o-Stellung zur Azogruppe trägt,

B den Rest einer Kupplungskomponente, welche die Gruppe X in Nachbarstellung zur Azogruppe trägt,

X Sauerstoff oder einen Rest der Formel —NR—, wobei R Wasserstoff oder $C_1$-$C_4$-Alkyl bedeutet,

Ar einen gegebenenfalls substituierten Arylrest, welcher mindestens zwei Sulfogruppen trägt,

m 0 oder 1,

und

$Ka^{\oplus}$ ein Kation bedeutet,

wobei der Ring D weitere Substituenten tragen kann mit der Massgabe, dass sich keine Nitrogruppe in der 5-Position des 1-Hydroxy-2-aminobenzolrests D befindet.

2. Farbstoffe gemäss Anspruch 1, worin A den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist, bedeutet.

3. Farbstoffe gemäss Ansprüchen 1 oder 2, worin B ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann.

4. Farbstoffe gemäss einem der Ansprüche 1 bis 3, worin B der Rest einer Aminonaphtholsulfonsäure, insbesondere der 2-Amino-5-hydroxynaphthalin-7-sulfonsäure und vor allem der 2-Amino-8-hydroxynaphthalin-6-sulfonsäure ist.

5. Farbstoffe gemäss einem der Ansprüche 1 bis 4, worin der Ring D unsubstituiert ist oder durch Sulfo, Nitro, Chlor, Methyl oder Methoxy weitersubstituiert ist.

6. Farbstoffe gemäss einem der Ansprüche 1 bis 5, worin Ar einen Benzol- oder Naphthalinrest darstellt, der zwei oder drei Sulfogruppen trägt.

7. Farbstoffe gemäss Anspruch 6, worin Ar den Rest einer Aminobenzoldisulfonsäure oder Aminonaphthalintrisulfonsäure ist.

8. Farbstoffe gemäss Anspruch 6, worin Ar den Rest von 1-Aminobenzol-2,4- oder -2,5-disulfonsäure, 2-Aminonaphthalin-4,8-disulfonsäure oder 2-Aminonaphthalin-4,6,8-trisulfonsäure ist.

9. Farbstoffe gemäss einem der Ansprüche 1 bis 8, welche 2, 3, 4 oder 5 Sulfogruppen enthalten.

10. Farbstoffe gemäss einem der Ansprüche 1 bis 9, worin m 0 bedeutet.

11. Farbstoffe der Formel II

(Siehe Formel II Seite 29 f.)

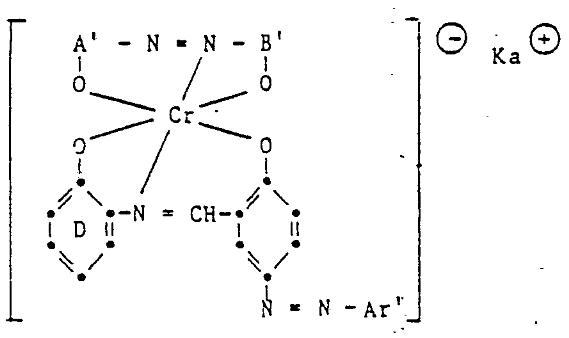

(II)

die 2, 3, 4 oder 5 Gruppen der Formel $—SO_3^{\ominus}Ka^{\oplus}$ aufweisen, und worin

A′ den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B′ den Rest eines gegebenenfalls durch Amino und/oder Sulfo substituierten 1- oder 2-Naphthols, eines 1- oder 2-Naphthylamins, gegebenenfalls substituiert durch Sulfo, eines p-Alkyl($C_1$-$C_6$)-phenols, 1-Phenyl-3-methyl-5-pyrazolons, oder Acetessigsäureanilids darstellt, wobei die Phenylgruppe in den beiden letztgenannten Verbindungen durch $C_1$-$C_4$-Alkyl, $C_1$-$C_4$-Alkoxy, Chlor, Nitro oder Sulfo substituiert sein kann,

Ar′ einen Benzol- oder Naphthalinrest, der zwei oder drei Sulfogruppen trägt, und

$Ka^{\oplus}$ ein Kation bedeutet, wobei der Ring

D gegebenenfalls weitersubstituiert ist durch Sulfo, Nitro, Chlor, Methyl oder Methoxy mit der Massgabe, dass sich keine Nitrogruppe in der 5-Position des 1-Hydroxy-2-aminobenzolrests D befindet.

12. Farbstoffe gemäss Anspruch 11, worin A′ den Rest von 2-Amino-4-nitro-6-sulfo-1-hydroxybenzol und B′ den Rest von 2-Amino-6-sulfo-8-hydroxynaphthalin bedeutet.

13. Verfahren zur Herstellung von Farbstoffen der Formel I, dadurch gekennzeichnet, dass man den 1 : 1-Chromkomplex des Azofarbstoffs herstellt und diesen dann mit dem Arylazo-Azomethinfarbstoff oder vorzugsweise mit einem Gemisch des entsprechenden Amins und Aldehyds umsetzt.

14. Verwendung von Farbstoffen der Formel I zum Färben von Wolle, Polyamid und insbesondere von Leder oder Pelzen.

**Claims**

1. A 1 : 2 chromium complex dye of the formula I

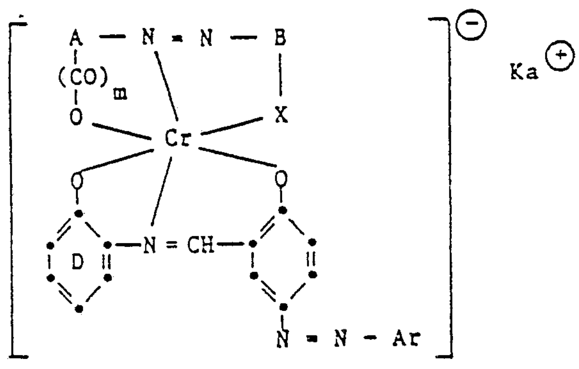

(I)

which has 2 to 7 groups of the formula $—SO_3^{\ominus}Ka^{\oplus}$, and wherein

A is the radical of a diazo component of the benzene or naphthalene series, which carries the hydroxyl or carboxyl group in the o-position with respect to the azo group,

B is the radical of a coupling component which carries the group X in the position adjacent to the azo group,

X is oxygen, or a radical of the formula —NR—, in which R is hydrogen or $C_1$-$C_4$ alkyl,

Ar is an unsubstituted or substituted aryl radical which carries at least two sulfo groups,

m is 0 or 1 and

$Ka^{\oplus}$ is a cation,

where the ring D can carry further substituents, with the proviso that a nitro group is not situated in the 5-position of the 1-hydroxy-2-aminobenzene radical D.

2. A dye according to claim 1, wherein A is the radical of a 1-hydroxy-2-aminobenzene, which is unsubstituted or substituted by halogen, nitro, sulfo or lower alkyl or alkoxy, or is the radical of a 1-amino-2-hydroxy-4-sulfonaphthalene which is unsubstituted or substituted in the 6-position by halogen, such as bromine or especially chlorine, or by nitro or sulfo.

3. A dye according to claim 1 or 2, wherein B is a 1- or 2-naphthol which is unsubstituted or substituted by amino and/or sulfo ; 1- or 2-naphthylamine, wunsubstituted or substituted by sulfo ; or p-alkyl ($C_1$-$C_6$)-phenol, 1-phenyl-3-methyl-5-pyrazolone or acetoacetic acid anilide, where the phenyl group in the two last-mentioned compounds can be substituted by $C_1$-$C_4$ alkyl, $C_1$-$C_4$ alkoxy, chlorine, nitro or sulfo.

4. A dye according to any one of claims 1 to 3, wherein B is the radical of an aminonaphtholsulfonic acid, especially 2-amino-5-hydroxynaphthalene-7-sulfonic acid and in particular 2-amino-8-hydroxynaphthalene-6-sulfonic acid.

5. A dye according to any one of claims 1 to 4, wherein the ring D is unsubstituted or further substituted by sulfo, nitro, chlorine, methyl or methoxy.

6. A dye according to any one of claims 1 to 5, wherein Ar is a benzene or naphthalene radical, which carries two or three sulfo groups.

7. A dye according to claim 6, wherein Ar is the radical of an aminobenzenedisulfonic acid or aminonaphthalenetrisulfonic acid.

8. A dye according to claim 6, wherein Ar is the radical of 1-aminobenzene-2,4- or -2,5-disulfonic acid, 2-aminonaphthalene-4,8-disulfonic acid or 2-aminonaphthalene-4,6,8-trisulfonic acid.

9. A dye according to any one of claims 1 to 8, which contains 2, 3, 4 or 5 sulfo groups.

10. A dye according to any one of claims 1 to 9, wherein m is zero.

11. A dye of the formula II

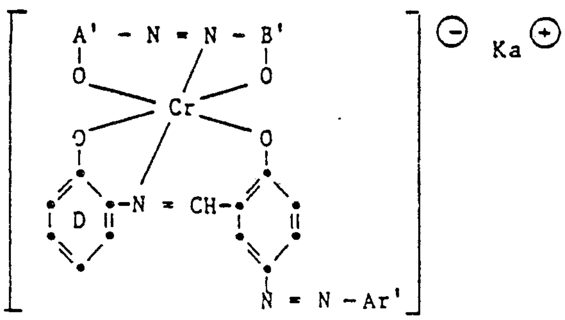

(II)

which has 2, 3, 4 or 5 groups of the formula $—SO_3^{\ominus}Ka^{\oplus}$,
and wherein

A′ is the radical of a 1-hydroxy-2-aminobenzene which is unsubstituted or substituted by halogen, nitro, sulfo or lower alkyl or alkoxy, or is the radical of a 1-amino-2-hydroxy-4-sulfonaphthalene, which is unsubstituted or substituted in the 6-position by chlorine, nitro or sulfo,

B′ is the radical of a 1- or 2-naphthol which is unsubstituted or substituted by amino and/or sulfo, of a 1- or 2-naphthylamine, unsubstituted or substituted by sulfo, or of a p-alkyl($C_1$-$C_6$)-phenol, of 1-phenyl-3-methyl-5-pyrazolone or of acetoacetic acid anilide, where the phenyl group in the two last-mentioned compounds can be substituted by $C_1$-$C_4$ alkyl, $C_1$-$C_4$ alkoxy, chlorine, nitro or sulfo,

Ar′ is a benzene or naphthalene radical, which carries two or three sulfo groups and

$Ka^{\oplus}$ is a cation, where the ring

D can be further substituted by sulfo, nitro, chlorine, methyl or methoxy, with the proviso that a nitro group is not situated in the 5-position of the 1-hydroxy-2-aminobenzene radical D.

12. A dye according to claim 11, wherein A′ is the radical of 2-amino-4-nitro-6-sulfo-1-hydroxybenzene, and B′ is the radical of 2-amino-6-sulfo-8-hydroxynaphthalene.

13. A process for producing a dye of the formula I, which process comprises producing the 1 : 1 chromium complex of the azo dye, and then reacting this with the arylazoazomethine dye, or preferably with a mixture of the corresponding amine and aldehyde.

14. The use of a dye of the formula I for dyeing wool, polyamide, and in particular leather or furs.

**Revendications**

1. Colorants à complexe de chrome 1 : 2 de formule I

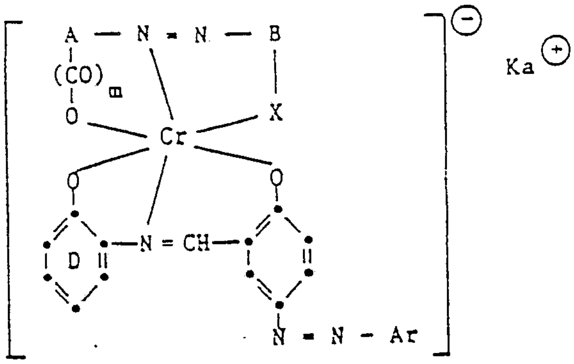

(I)

comportant de 2 à 7 groupes de formule —$SO_3^{\ominus}Ka^{\oplus}$,
et dans laquelle

A est le résidu d'un composant diazo de la série du benzène ou du naphtalène, qui porte le groupe hydroxy ou carboxy en position ortho par rapport au groupe azoïque,

B est le résidu d'un composant de copulation, qui porte le groupe X en position voisine par rapport au groupe azoïque,

X est un oxygène ou un résidu de formule —NR—, où R est un hydrogène ou un radical alkyle en $C_1$-$C_4$,

Ar est un radical aryle éventuellement substitué, lequel porte au moins deux groupes sulfo,

m vaut 0 ou 1,

$Ka^{\oplus}$ est un cation,

le noyau D pouvant porter des substituants supplémentaires, à la condition qu'aucun groupe nitro ne se trouve sur la position 5 du résidu 1-hydroxy-2-aminobenzénique D.

2. Colorants selon la revendication 1, où A est le résidu d'un 1-hydroxy-2-aminobenzène, lequel est éventuellement substitué par un radical halogéno, nitro, sulfo, ou alkyle ou alcoxy inférieur, ou encore le résidu d'un 1-amino-2-hydroxy-4-sulfonaphtalène, lequel est éventuellement substitué en position 6 par un halogène, comme le brome ou en particulier le chlore, ou un radical nitro ou sulfo.

3. Colorants selon les revendications 1 ou 2, où B est un 1- ou un 2-naphtol éventuellement substitué par un radical amino et/ou sulfo, une 1- ou 2-naphtylamine éventuellement substituée par un radical sulfo, un p-(alkyle en $C_1$-$C_6$)-phenol, la 1-phényl-3-méthyl-5-pyrazolone ou l'acétoacétanilide, le groupe phényle, dans ces deux derniers composés, pouvant être substitué par un radical alkyle en $C_1$-$C_4$, alcoxy en $C_1$-$C_4$, chloro, nitro ou sulfo.

4. Colorants selon l'une des revendications 1 à 3, où B est le résidu d'un acide aminonaphtolsulfonique, en particulier de l'acide 2-amino-5-hydroxynaphtalène-7-sulfonique et surtout de l'acide 2-amino-8-hydroxynaphtalène-6-sulfonique.

5. Colorants selon l'une des revendications 1 à 4, où le noyau D est non substitué, ou porte comme substituants supplémentaires un ou plusieurs radicaux sulfo, nitro, chloro, méthyle ou méthoxy.

6. Colorants selon l'une des revendications 1 à 5, où Ar est un résidu benzénique ou naphtalénique portant deux ou trois groupes sulfo.

7. Colorants selon la revendication 6, où Ar est le résidu d'un acide aminobenzènedisulfonique ou d'un acide aminonaphtalènetrisulfonique.

8. Colorants selon la revendication 6, où Ar est le résidu de l'acide 1-aminobenzène-2,4- ou -2,5-disulfonique, de l'acide 2-aminonaphtalène-4,8-disulfonique ou de l'acide 2-aminonaphtalène-4,6,8-trisulfonique.

9. Colorants selon l'une des revendications 1 à 8, qui contiennent 2, 3, 4 ou 5 groupes sulfo.

10. Colorants selon l'une des revendications 1 à 9, où m vaut 0.

11. Colorants de formule II

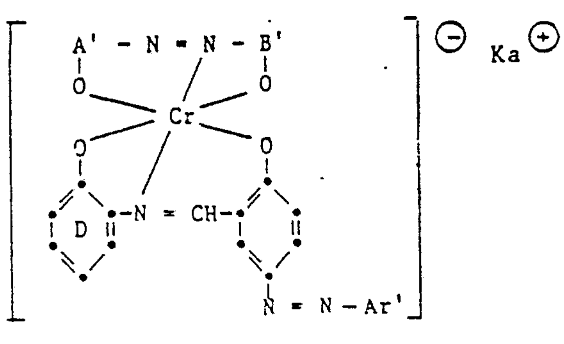

(II)

comportant 2, 3, 4 ou 5 groupes de formule —$SO_3^{\ominus}Ka^{\oplus}$,

et dans laquelle

A' est le résidu d'un 1-hydroxy-2-aminobenzène, lequel est éventuellement substitué par un radical halogéno, nitro, sulfo ou alkyle ou alcoxy inférieur, ou encore le résidu d'un 1-amino-2-hydroxy-4-sulfonaphtalène, lequel est éventuellement substitué en position 6 par un radical chloro, nitro, ou sulfo,

B' est le résidu d'un 1- ou d'un 2-naphtol éventuellement substitué par un groupe amino et/ou sulfo, d'une 1- ou 2-naphtylamine, éventuellement substituée par un radical sulfo, d'un p-(alkyle en $C_1$-$C_6$)-phénol, de la 1-phényl-3-méthyl-5-pyrazolone ou de l'acétoacétanilide, le groupe phényle, dans ces deux derniers composés, pouvant être substitué par un radical alkyle en $C_1$-$C_4$, alcoxy en $C_1$-$C_4$, chloro, nitro ou sulfo,

Ar' est un résidu benzénique ou naphtalénique, portant deux ou trois groupes sulfo,

$Ka^{\oplus}$ est un cation,

le noyau D pouvant éventuellement être encore substitué par des radicaux sulfo, nitro, chloro, méthyle ou méthoxy, à la condition qu'aucun groupe nitro ne se trouve en position 5 du résidu 1-hydroxy-2-aminobenzénique D.

12. Colorants selon la revendication 11, où A' est le résidu du 2-amino-4-nitro-6-sulfo-1-hydroxybenzène et B' est le résidu du 2-amino-6-sulfo-8-hydroxynaphtalène.

13. Procédé pour la préparation de colorants de formule I, caractérisé en ce qu'on prépare le complexe de chrome 1 : 1 du colorant azoïque, puis on fait réagir ce dernier sur le colorant arylazo-azométhine, ou de préférence sur un mélange de l'amine et de l'aldéhyde correspondants.

14. Utilisation de colorants de formule I pour la teinture de la laine, du polyamide et en particulier du cuir ou des peaux.